# EUROPEAN PATENT SPECIFICATION

(11) **EP 1 879 056 B1**
(45) Date of publication and mention of the grant of the patent: **20.03.2013**
(21) Application number: 06731888.1
(22) Date of filing: 14.04.2006
(51) Int. Cl.: B32B 27/32, B32B 5/18, B32B 27/20, G02B 5/08, G02B 5/02, B29C 44/22, B29D 11/00, G02F 1/1335, C08J 9/04

(54) **FOAMED SHEET FOR A REFLECTOR, PROCESS FOR PRODUCTION OF THE SHEET AND FOR PRODUCTION OF A REFLECTOR**
SCHAUM-BLATT FÜR EINEN REFLEKTOR, PROZESS ZUR HERSTELLUNG DES BLATTS UND ZUR HERSTELLUNG EINES REFLEKTORS
FEUILLE DE MOUSSE POUR UN RÉFLECTEUR, PROCÉDÉ DE FABRICATION DE LA FEUILLE ET PROCÉDÉ DE FABRICATION D'UN RÉFLECTEUR

(30) Priority: 19.04.2005 JP 2005120881; 19.04.2005 JP 2005120882
(43) Date of publication of application: 16.01.2008
(73) Proprietor: Sekisui Plastics Co., Ltd., Osaka-shi, Osaka 530-8565 (JP)
(72) Inventor: YOSHIDA, Kenichi, 6391026 (JP); SHINDO, Masahiro, 6390256 (JP); HITOMI, Kazutoshi, Nara-shi,Nara 630-8302 (JP); TARUMOTO, Hiroyuki, 6392274 (JP)
(74) Representative: HOFFMANN EITLE
(86) International application number: PCT/JP2006/307952
(87) International publication number: WO 2006/115087

(56) References cited:
- EP-A- 0 344 726
- WO-A-02/00412
- JP-A- 11 300 814
- JP-A- 2004 271 567
- JP-A- 2005 055 883
- US-A1- 2002 193 458
- US-A1- 2004 175 562

## Description

### TECHNICAL FIELD

The present invention relates to a foamed sheet for a reflector, to a reflector, and to a method for producing a foamed sheet for a reflector.

### BACKGROUND ART

Recently, liquid crystal display devices have been used widely. In liquid crystal display devices, light is applied to liquid crystal cells from a light source located on the back or the side of the liquid crystal cells. In order to increase the quantity of the light applied from the light source to the liquid crystal cells, a reflector is disposed on the back of the light source.

Upsizing of liquid crystal display devices has been proceeding rapidly. In order to obtain a satisfactory brightness throughout a liquid crystal display, a reflector must have a shape in conformity with cold-cathode tubes. Particularly in backlighting liquid crystal display devices, a plurality of cold-cathode tubes are arranged on the back of liquid crystal cells. Therefore, a reflector must be processed into a complicated shape in conformity with the arrangement of the cold-cathode tubes.

As one example of such a reflector, Patent Document 1 discloses that a reflector having an excellent light reflectance can be obtained by making a polyester resin contain 2 to 25% by weight of a polyolefin resin, thereafter supplying it into an extruder, extruding it into a sheet form, and then biaxially stretching the resulting sheet to form fine hollow cells.

However, such a reflector is of poor thermoformability because it has been stretched.

In order to process the reflector into a shape in conformity with the arrangement of cold-cathode tubes, it is necessary to make a cut in the reflector before bending it. Therefore, the reflector is of poor processability and has a problem that cracks or wrinkles are produced therein during its bending process.

Patent Document 1: JP 4 - 239540 A
US 2002/0193458 discloses a method for forming a foamed polypropylene resin sheet, comprising blending a polypropylene resin composition with an inorganic filler such as Titanium oxide, preferably 5 to 30% by weight based on the composition, and adding a thereto a forming agent , extrusion-foaming a foamable polypropylene-based resin composition.
WO 02/00412 A2 discloses a method for making a foamed article comprising mixing a polypropylene and a blowing agent in an apparatus having an exit shaping orifice under a certain temperature and pressure, and passing the mixture through the exit shaping orifice and exposing the mixture to atmosphere, whereby the blowing agent expands causing cell formation resulting in foam formation.
US 2004/175562 A1 discloses a laminate and light-reflecting sheet.

### DISCLOSURE OF THE INVENTION

### Problem to be Solved by the Invention

The present invention provides a foamed sheet for a reflector which can be fabricated into a reflector with a desired shape by thermoforming, a method for producing a foamed sheet for a reflector and a method for producing a reflector by thermoforming a foamed sheet for a reflector.

### Means for Solving the Problem

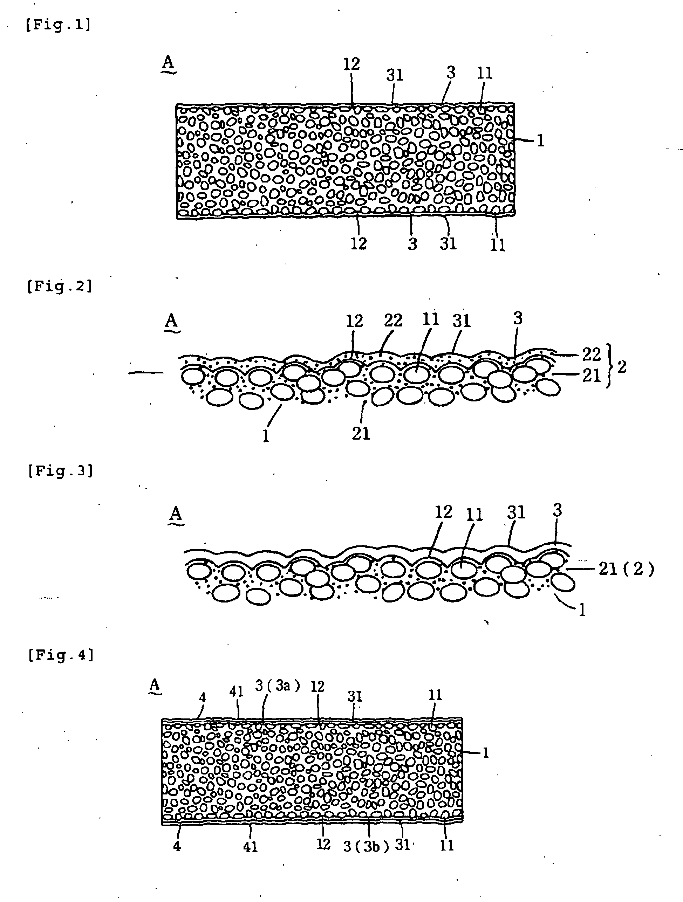

A foamed sheet A for a reflector according to an embodiment of the present invention is, as shown in Figs. 1 and 2, a foamed sheet for a reflector including a polypropylene-based resin foamed sheet 1 which has an average cell diameter of from 50 to 650 µm and having at least one surface which is formed to be an uneven surface 12 formed by cells located in the vicinity of the surface, and a polypropylene-based resin non-foamed sheet 3 integrally laminated on the uneven surface 12 of the polypropylene-based resin foamed sheet 1 in conformity with the uneven surface 12 and having an uneven surface 31 having a roughness of 0.4 to 5.0 µm, wherein the foamed sheet for a reflector contains an inorganic filler 2 in an amount of from 50 to 200 g/m², the inorganic filler 2 is contained in the polypropylene-based resin foamed sheet 1, and the polypropylene - based non-foamed sheet 3, the amount of the filler in the foamed sheet 1 being 10 to 80% by weight of the total amount of the filler in the foamed sheet A, a refractive index of the inorganic filler 2 differs by 1.0 or more from a refractive index of the polypropylene-based resin in contact with the inorganic filler 2, and the foamed sheet for a reflector has an overall thickness of from 0.2 to 2.0 mm and a light reflectance of 97% or more.

Examples of the polypropylene-based resin of the polypropylene-based resin foamed sheet 1 constituting the foamed sheet A for a reflector include polypropylene homopolymers and copolymers of propylene and another olefin. Examples of the olefin include ethylene and α-olefins having 4 to 10 carbon atoms such as 1-butene, 1-pentene, 4-methyl-1-pentene, 1-hexene, 1-octene, 1-nonene and 1-decene.

In the case of a copolymer of propylene and another olefin, it preferably contains the olefin other than propylene in an amount of from 0.5 to 30% by weight, more preferably from 1 to 10% by weight. This is because when the content of the olefin other than propylene is too large, the heat resistance of a resulting foamed sheet for a reflector may be lowered, whereas when the content is too small, the impact resistance of a resulting foamed sheet for a reflector may be lowered.

If the average cell diameter of the polypropylene-based resin foamed sheet 1 is too small, the irregularities formed in the surface of the foamed sheet is small and, as a result, the light diffusion efficiency of the surface of the foamed sheet for a reflector is reduced and, for example, the surface of a back light unit in which a reflector produced from the foamed sheet for a reflector is incorporated shows a wide variation in brightness. On the other hand, if the average cell diameter is too large, the irregularities formed in the surface of the foamed sheet is too large and, as a result, the light reflectance of the foamed sheet for a reflector is lowered. Therefore, the average cell diameter is limited to from 50 to 650 µm, and preferably is from 50 to 500 µm, more preferably from 55 to 400 µm. The average cell diameter of the polypropylene-based resin foamed sheet 1 is calculated based on the average chord length measured in accordance with the test ing method of ASTM D2842-69.

At least one surface of the polypropylene-based resin foamed sheet 1 is wholly formed to be the uneven surface 12 formed by fine irregularities due to cells 11 located in the vicinity of the surface of the polypropylene-based resin foamed sheet 1. By integrally laminating the polypropylene-based resin non-foamed sheet 3 on the uneven surface 12 of the polypropylene-based resin foamed sheet 1 in conformity with the irregularities of the uneven surface 12, the surface of the polypropylene-based resin non-foamed sheet 3 is formed to be the uneven surface 31 approximately in conformity with the irregularities of the uneven surface 12 of the polypropylene-based resin foamed sheet 1.

As.described above, the surface of the polypropylene-based resin non-foamed sheet 3 is formed to be the uneven surface 31 like the polypropylene-based resin foamed sheet 1 and, thereby, the polypropylene-based resin non-foamed sheet 3 is caused to have a large surface area. By the uneven surface 31 having such a large surface area, the light which comes into the foamed sheet A for a reflector is diffusingly reflected uniformly and thereby the light reflectance is increased.

When both surfaces of the polypropylene-based resin foamed sheet 1 are formed as the uneven surfaces 12, 12, the polypropylene-based resin non-foamed sheet 3 may be integrally laminated either on both the uneven surfaces 12, 12 or on only one uneven surface 12.

The particulars of the polypropylene-based resin constituting the polypropylene-based resin non-foamed sheet 3 are the same as those of the polypropylene-based resin constituting the aforementioned polypropylene-based resin foamed sheet 1. The explanation thereof is therefore omitted.

Because the polypropylene-based resin non-foamed sheet 3 is integrally laminated on the uneven surface 12 of the polypropylene-based resin foamed sheet 1, it is possible to correct surface roughness Ra of the uneven surface 12 of the polypropylene-based resin foamed sheet 1 and thereby improve the light reflection performance of the foamed sheet for a reflector easily by adjusting the thickness of the polypropylene-based resin non-foamed sheet 3.

If the surface roughness Ra of the uneven surface 31 of the polypropylene-based resin non-foamed sheet 3 is too small, small irregularities are formed in a surface of the foamed sheet for a reflector and therefore the efficiency of light diffusion on the surface of the foamed sheet for a reflector is reduced. On the other hand, if it is too large, too large irregularities are formed on a surface of the foamed sheet for a reflector and, as a result, the light reflectance of the foamed sheet for a reflector is rather reduced. It therefore is within the range from 0.4 to 5.0 µm, preferably within the range from 1.1 to 4.0 µm, and particularly preferably within the range from 1.2 to 3.0 µm. The surface roughness Ra of the uneven surface 31 of the polypropylene-based resin non-foamed sheet 3 can be adjusted through adjustment of the cell diameter or expansion ratio of the polypropylene-based resin foamed sheet 1 as well as the thickness of the polypropylene-based resin non-foamed sheet.

The surface roughness Ra of the uneven surface 31 of the polypropylene-based resin non-foamed sheet 3 is a value measured at a standard length of 2.5 mm and an evaluation length of 12.5 mm in accordance with JIS B0601. Specifically, it can be measured by use of a combination of measuring instruments commercially available under the trade names of "Double-Scanning High-Accuracy Laser Analyzer LT-9500" and "Double-Scanning High-Accuracy Laser Analyzer LT-9010M" from KEYENCE CORPORATION and a measuring instrument commercially available under the trade name of "Non-Contact Profile/Roughness Measuring System MAP-2DS" from COMS Co., Ltd.

If the thickness of the polypropylene-based resin non-foamed sheet 3 is too small, the effect of correcting the surface roughness Ra of the uneven surface 12 of the polypropylene-based resin foamed sheet 1 may not be developed. On the other hand, if it is too large, in some cases the irregularities in the uneven surface 12 of the polypropylene-based resin foamed sheet 1 are concealed by the polypropylene-based resin non-foamed sheet 3 and the efficiency of light diffusion on the surface of the foamed sheet for a reflector is reduced. Therefore, the thickness is preferably from 0.03 to 0.4 mm, more preferably from 0.03 to 0.2 mm, and particularly preferably from 0.04 to 0.17 mm.

Here, the thickness of the polypropylene-based resin non-foamed sheet 3 is a thickness measured in the following procedure. The foamed sheet for a reflector is cut in its thickness direction throughout its length. The thickness direction of the foamed sheet for a reflector is the direction perpendicular to the surface of the foamed sheet for a reflector. Then, the cut section of the foamed sheet for a reflector is observed by an electron microscope and an electron micrograph is taken at a magnification within the range of from 25 to 100. At ten points selected randomly on the electron micrograph, straight lines from the surface of the polypropylene-based resin non-foamed sheet 3 to the interface between the polypropylene-based resin non-foamed sheet 3 and the polypropylene-based resin foamed sheet 1 are drawn along the thickness direction of the foamed sheet for a reflector. Among the straight lines, the shortest one is defined as the thickness of the polypropylene-based resin non-foamed sheet 3. In the event that the interface between the polypropylene-based resin foamed sheet 1 and the polypropylene-based resin non-foamed sheet 3 is not clear, a straight line can be drawn from the surface of the polypropylene-based resin non-foamed sheet 3 to the cell wall which the straight line intersects first among the cell walls of the polypropylene-based resin foamed sheet 1.

To the polypropylene-based resin foamed sheet 1 and the polypropylene-based resin non-foamed sheet 3, additives such as a stabilizer and an antistatic agent may be added unless the physical properties of the sheets are affected.

An inorganic filler is contained in the above-mentioned foamed sheet A for a reflector. If the overall content of the inorganic filler 2 in the foamed sheet A for a reflector is too small, the light reflectance of the foamed sheet for a reflector is lowered. On the other hand, if it is too large, the expansion moldability of the foamed sheet for a reflector is deteriorated and the lightweight property of the foamed sheet is also deteriorated. It therefore is limited to from 50 to 200 g/m² and it is preferably from 50 to 150 g/m², and more preferably from 70 to 150 g/m².

Because the inorganic filler 2 has an activity of increasing the cell diameter of the polypropylene-based resin foamed sheet 1, 10 to 80 wt.% of the inorganic filler 21 is contained in the polypropylene-based resin foamed sheet 1 and the remaining portion of inorganic filler 22 is contained in the polypropylene-based resin non-foamed sheet 3.

If the content of the inorganic filler 21 in the polypropylene-based resin foamed sheet 1 is small, the light reflectance of the foamed sheet for a reflector may be low. The content of the inorganic filler 21 in the polypropylene-based resin foamed sheet 1 is therefore not less than 10% by weight, preferably not less than 15% by weight, and particularly preferably not less than 20% by weight of the inorganic filler contained throughout the foamed sheet for a reflector. On the other hand, if the content is too large, the foamability in the production of a polypropylene-based resin foamed sheet is lowered and, as a result, the density of the resulting polypropylene-based resin foamed sheet may become large or rupture of cells may occur. Therefore, the content of the inorganic filler 21 in the polypropylene-based resin foamed sheet 1 is not more than 80% by weight, preferably not more than 70% by weight, and particularly preferably not more than 60% by weight.

The refractive index of the inorganic filler is required to have a difference of 1.0 or more from the refractive index of the polypropylene-based resin in contact with the inorganic filler. In other words, the difference between the refractive index of the inorganic filler 21 contained in the polypropylene-based resin foamed sheet 1 and the refractive index of the polypropylene-based resin constituting the polypropylene-based resin foamed sheet 1 must be 1.0 or more. Similarly, the difference between the refractive index of the inorganic filler 22 contained in the polypropylene-based resin non-foamed sheet 3 and the refractive index of the polypropylene-based resin constituting the polypropylene-based resin non-foamed sheet 3 must be 1.0 or more.

By adjusting the refractive index difference between the inorganic filler 2 and the polypropylene-based resin in contact with the inorganic filler 2 to be 1.0 or more, it is possible to significantly refract and diffusingly reflect the light which has entered into the foamed sheet A for a reflector at the interface between the inorganic filler 2 and the polypropylene-based resin in contact with the inorganic filler 2 and thereby increase the light reflectance of the foamed sheet A for a reflector.

Here, the refractive index of a polypropylene-based resin is a value measured in accordance with JIS K7142. The refractive index of an inorganic filler is described in, for example, "Jitsuyo Plastic Jiten (Practical Plastics Dictionary)" published by Kabushiki Kaisha Sangyo Chosakai Jiten Shuppan Center.

The above-mentioned inorganic filler 2 is not particularly restricted if the refractive index difference between the inorganic filler 2 and the polypropylene-based resin in contact with the inorganic filler 2 is 1.0 or more. Examples thereof include rutile-type titanium dioxide, anatase-type titanium dioxide and potassium titanate. Rutile-type titanium dioxide is preferred. A single species of the inorganic filler may be used or, alternatively, two or more species of the inorganic fillers may be used together.

Titanium dioxide has a photocatalytic effect. If the photocatalytic effect is too strong, the degradation of the polypropylene-based resin may be accelerated. It therefore is preferable to cover the surface of titanium dioxide with a hydrous oxide of a metal such as aluminum, silicon, titanium, zirconium or tin. US Patent No. 2885366 discloses a method of coating the surface of rutile-type titanium dioxide with compact amorphous hydrous silicon dioxide. US Patent No. 3383231 discloses a method of coating the surface of rutile-type titanium dioxide with a hydrous oxide of zirconium. The inorganic filler 21 to be contained in the polypropylene-based resin foamed sheet 1 and the inorganic filler 22 to be contained in the polypropylene-based resin non-foamed sheet 3 may be either of the same kind or of different kinds.

If the density of the overall foamed sheet for a reflector is too small, the shaping accuracy of the foamed sheet for a reflector is deteriorated. On the other hand, if it is too large, the number of cells in the polypropylene-based resin foamed sheet is small and, as a result, the diffusing reflection of light at the interface between the polypropylene-based resin constituting the polypropylene-based resin foamed sheet and the air enclosed in cells is reduced and the light reflectance of the foamed sheet for a reflector may be low. Therefore, it is preferably from 0.1 to 0.8 g/cm³, and more preferably from 0.2 to 0.75 g/cm³.

If the overall thickness of the foamed sheet for a reflector is too small, the strength of the foamed sheet for a reflector may be low and, as a result, it may be less easy to handle the foamed sheet. On the other hand, if it is too large, the light reflectance of the foamed sheet for a reflector may be low or a final product containing the foamed sheet for a reflector may have a large thickness. Therefore, it is limited to from 0.2 to 2.0 mm, and it is preferably from 0.3 to 1.8 mm, and more preferably from 0.4 to 1.5 mm.

The density and the thickness of an overall foamed sheet for a reflector are values measured in accordance with the method provided in JIS K7222: 1999 "Foamed plastics and rubbers - Determination of apparent (bulk) density." The measuring method of the density of an overall foamed sheet for a reflector is specifically as follow. A specimen having a volume of 50 cm³ or more is cut from a foamed sheet for a reflector which has been left at rest under an atmosphere at 23°C for 72 hours immediately after the production of the foamed sheet. The specimen is further left at rest for 16 hours under an atmosphere at from 21 to 25°C and a relative humidity of from 45 to 55%. Then, the weight and the apparent volume of the specimen are measured. The density of the overall foamed sheet for a reflector can be calculated by dividing the weight by the apparent volume.

If the light reflectance of a foamed sheet for a reflector is too low, the foamed sheet can not be used suitably as a light-reflective material. Therefore, it is limited to 97% or more, and it is preferably 98% or more, and more preferably 99% or more.

The light reflectance of a foamed sheet for a reflector is a light reflectance at a wavelength of 550 nm measured in the total reflected light measurement at a 8° incidence conducted in accordance with Measuring Method B provided in JIS K7105. It is expressed as a relative value based on the light reflectance measured using a barium sulfate plate as a standard reflector, which is equated to 100.

- The light reflectance of a foamed sheet for a reflector can specifically be measured by use of a combination of a ultraviolet-visible spectrometer commercially available under the trade name "UV-2450" from Shimadzu Corporation and an integrating sphere attachment (inner diameter 60 mm) commercially available under the trade name "ISR-2200" from Shimadzu Corporation.

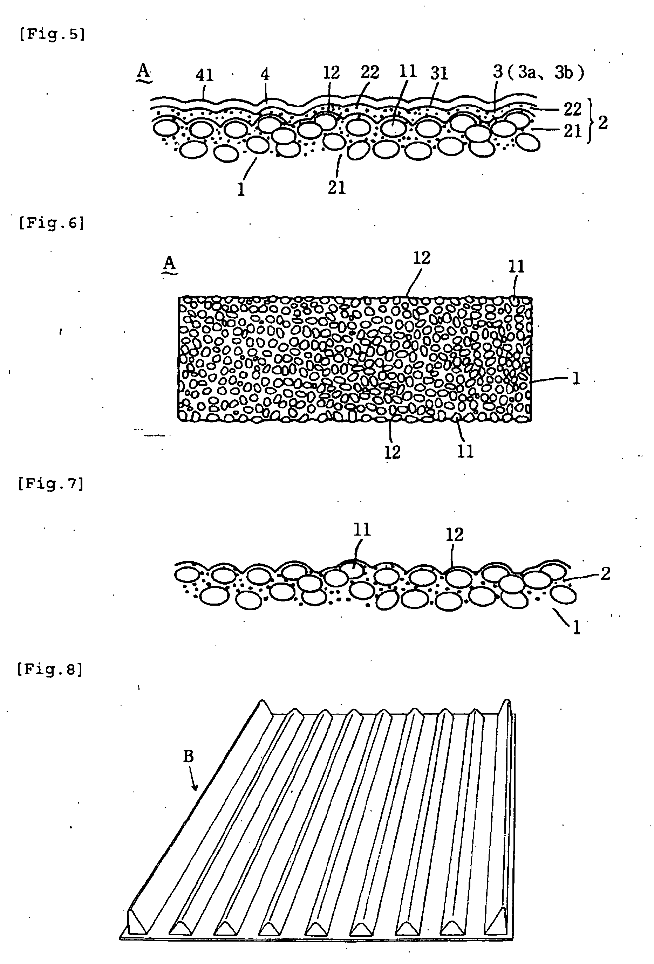

Further, as shown in Fig. 4 and Fig. 5, on the polypropylene-based resin non-foamed sheet 3, another polypropylene-based resin non-foamed sheet 4 may be integrally laminated in conformity with the uneven surface 31 of the polypropylene-based resin non-foamed sheet 3. In this case, the surface of the polypropylene-based resin non-foamed sheet 4 is formed to be an uneven surface 41 approximately in conformity with the irregularities in the uneven surface 31 of the polypropylene-based resin non-foamed sheet 3. In the event that the polypropylene-based resin non-foamed sheets 3 are integrally laminated on both surfaces of the polypropylene-based resin foamed sheet 1, the polypropylene-based resin non-foamed sheet 4 may be integrally laminated on either both the polypropylene-based resin non-foamed sheets 3, 3 or only one polypropylene-based resin non-foamed sheet 3.

The particulars of the polypropylene-based resin constituting the polypropylene-based resin non-foamed sheet 4 are the same as those of the polypropylene-based resin constituting the polypropylene-based resin non-foamed sheet 3. The surface roughness Ra of the polypropylene-based resin non-foamed sheet 4 is the same as the surface roughness Ra of the polypropylene-based resin non-foamed sheet 3. The explanation thereof is therefore omitted.

Additives such as a stabilizer, an antistatic agent and an inorganic filler may be contained also in the polypropylene-based resin non-foamed sheet 4. The inorganic filler is the same as that previously described. The explanation thereof is therefore omitted.

If the thickness of the polypropylene-based resin non-foamed sheet 4 is too small, it may be difficult to laminate it on the polypropylene-based resin non-foamed sheet 3. On the other hand, if it is too large, in some cases the irregularities in the uneven surface 31 of the polypropylene-based resin foamed sheet 3 are concealed by the polypropylene-based resin non-foamed sheet 4 and the efficiency of light diffusion on the surface of the foamed sheet for a reflector is reduced. Therefore, the thickness is preferably from 0.01 to 0.4 mm, more preferably from 0.01 to 0.2 mm, particularly preferably from 0.02 to 0.18 mm, and most preferably from 0.03 to 0.15 mm.

Here, the thickness of the polypropylene-based resin non-foamed sheet 4 is a thickness measured in the following procedure. The foamed sheet for a reflector is cut in its thickness direction throughout its length. The thickness direction of the foamed sheet for a reflector is the direction perpendicular to the surface of the foamed sheet for a reflector. Then, the cut section of the foamed sheet for a reflector is observed by an electron microscope and an electron micrograph is taken at a magnification within the range of from 25 to 100. At ten points selected randomly on the electron micrograph, straight lines from the surface of the polypropylene-based resin non-foamed sheet 4 to the interface between the polypropylene-based resin non-foamed sheet 4 and the polypropylene-based resin non-foamed sheet 3 are drawn along the thickness direction of the foamed sheet A for a reflector. Among the straight lines, the shortest one is defined as the thickness of the polypropylene-based resin non-foamed sheet 4. When it is difficult to recognize the interface between the polypropylene-based non-foamed sheet 3 and the polypropylene-based resin non-foamed sheet 4, the thickness of the polypropylene-based resin non-foamed sheet 4 can be measured in the same way as mentioned above by preparing and using a sheet for test having the same constitution as the foamed sheet A for a reflector to be tested except that one sheet selected from the polypropylene-based resin non-foamed sheet 3 and the polypropylene-based resin non-foamed sheet 4 is colored. The sheet for test can be easily produced, for example, by adding a coloring agent that does not cause any problems in the production of a foamed sheet for a reflector to an extruder for producing the polypropylene-based resin non-foamed sheet 3 or the polypropylene-based resin non-foamed sheet 4.

In the description about the foamed sheet A for a reflector, cases where the polypropylene-based resin non-foamed sheet 3 is integrally laminated on at least one surface of the polypropylene-based resin foamed sheet 1 are described. However, in a comparative example as shown in Fig. 6 and Fig. 7, no polypropylene-based resin non-foamed sheet 3 may be integrally laminated on the surfaces of the polypropylene-based resin foamed sheet 1. The explanation about constitutions similar to those of the foamed sheet A for a reflector shown in Fig. 1 is omitted.

At least one surface of the polypropylene-based resin foamed sheet 1 which constitutes the foamed sheet A for a reflector is wholly formed to be the uneven surface 12 formed by fine irregularities due to the cells 11 located in the vicinity of the surface. As described above, one surface or both surfaces of the polypropylene-based resin foamed sheet 1 is formed to be the uneven surface 12 and, thereby, the polypropylene-based resin foamed sheet 1 is caused to have a large surface area. By the uneven surface 12 having such a large surface area, the light which comes into a foamed sheet for a reflector is diffusingly reflected uniformly and thereby the light reflectance of a foamed sheet A for a reflector is increased.

If the content of the inorganic filler 2 in the polypropylene-based resin foamed sheet 1 is too small, the light reflectance of the foamed sheet for a reflector is lowered. On the other hand, if it is too large, the expansion moldability of the foamed sheet for a reflector is deteriorated and the lightweight property of the foamed sheet is also deteriorated. It therefore is limited to from 50 to 200 g/m² and it is preferably from 50 to 150 g/m², and more preferably from 70 to 150 g/m².

If the density of the foamed sheet for a reflector is too small, the shaping accuracy of the foamed sheet for a reflector is deteriorated. On the other hand, if it is too large, the number of cells in the polypropylene-based resin foamed sheet is small and, as a result, the diffusing reflection of light at the interface between the polypropylene-based resin constituting the polypropylene-based resin foamed sheet and the air enclosed in cells is reduced and the light reflectance of the foamed sheet for a reflector may be low. Therefore, it is preferably from 0.1 to 0.7 g/cm³, more preferably from 0.2 to 0.7 g/cm³, and particularly preferably from 0.3 to 0.6 g/cm³.

If the thickness of the foamed sheet for a reflector is too small, the strength of the foamed sheet for a reflector may be low and, as a result, it may be less easy to handle the foamed sheet. On the other hand, if it is too large, the light reflectance of the foamed sheet for a reflector may be low or a final product containing the foamed sheet for a reflector may have a large thickness. Therefore, it is limited to from 0.2 to 2.0 mm, and it preferably is from 0.3 to 1.8 mm, and more preferably from 0.4 to 1.5 mm.

If the light reflectance of a foamed sheet for a reflector is too low, the foamed sheet can not be used suitably as a light-reflective material. Therefore, it is limited to 97% or more, and it is preferably 98% or more, and more preferably 99% or more.

Next, a method for producing the foamed sheet for a reflector of the present invention is described. First, a method for producing a foamed sheet A for a reflector in which a polypropylene-based resin non-foamed sheet 3 is integrally laminated on at least one surface of a polypropylene-based resin foamed sheet 1 is described.

The method for producing the foamed sheet A for a reflector of the present invention is not particularly restricted and examples thereof include: (1) a method of producing a foamed sheet for a reflector by integrally laminating a polypropylene-based resin foamed sheet and a polypropylene-based resin non-foamed sheet by coextrusion; (2) a method of extrusion laminating a polypropylene-based resin non-foamed sheet on an uneven surface 12 of a polypropylene-based resin foamed sheet 1; (3) a method of heat laminating a polypropylene-based resin non-foamed sheet on an uneven surface 12 of a polypropylene-based resin foamed sheet 1, and the like. Because the thickness of the polypropylene-based resin non-foamed sheet can be adjusted easily and the light reflectance of the foamed sheet for a reflector can be improved easily by finely adjusting the surface roughness Ra of the uneven surface 12 of the polypropylene-based resin foamed sheet 1, method (1) is preferred, and in method (1) it is more preferable to use a feed block method.

One example of the method for producing the above-mentioned polypropylene-based resin foamed sheet 1 is a production method which includes preparing a foamable polypropylene-based resin composition by feeding a polypropylene-based resin, an inorganic filler having a refractive index differing by 1.0 or more from the refractive index of the polypropylene-based resin, and a foaming agent into an extruder and melt-kneading them, and then extrusion foaming the foamable polypropylene-based resin composition through a die mounted to an end of the extruder to yield a polypropylene-based resin foamed sheet. The die is not particularly restricted if it is widely used for extrusion foaming and examples thereof include a T die and a circular die.

In the case of using a T die as the die, it is possible to produce a polypropylene-based resin foamed sheet by conducting extrusion foaming to form a sheet-shaped material from the extruder. On the other hand, when using a circular die as the die, it is possible to produce a polypropylene-based resin foamed sheet by preparing a cylinder by conducting extrusion foaming to form a cylindrical form through the circular die, radially expanding the cylinder gradually, conveying it on a cooling mandrel to cool it, and slitting the cylinder along its extrusion direction continuously between the inner and outer surfaces, followed by opening and unfolding it.

Next, the above-mentioned method (1) is described concretely. First, as the manufacturing apparatus, two extruders, namely, a first extruder and a second extruder, and a coextrusion die composed of a joining die and a circular die connected to the joining die are prepared. Both the first extruder and the second extruder are connected to the joining die of the coextrusion die. In the present invention, when two or more extruders are used in the manufacturing apparatus for producing a foamed sheet for a reflector, these extruders are distinguished by consecutively naming as a first extruder, a second extruder, a third extruder, and the like.

A polypropylene-based resin, an inorganic filler and a foaming agent are fed to the first extruder, and they are melt-kneaded to produce a foamable polypropylene-based resin composition. On the other hand, a polypropylene-based resin is fed, together with an inorganic filler, into the second extruder and it is then melt-kneaded in the absence of a foaming agent. By joining the molten resins extruded from the two extruders in the joining die of the coextrusion die, a foamable laminate is formed which is composed of a foamable polypropylene-based resin composition layer which is circular in cross section and a non-foamable polypropylene-based resin composition layer laminated on the outer peripheral surface of the foamable polypropylene-based resin composition layer. The foamable laminate is fed to the circular die and it is extrusion foamed into a cylindrical form through the circular die. Thus, a cylindrical foamed article is obtained.

Then, the cylindrical foamed article is radially expanded gradually and subsequently it is conveyed on a cooling mandrel. The cylindrical foamed article is thereby cooled. Thereafter, the cylindrical foamed article is slit along its extrusion direction continuously between the inner and outer peripheral surfaces, and thereby opened and unfolded into a sheet form. Thus, a foamed sheet for a reflector in which a polypropylene-based resin non-foamed sheet is integrally laminated on an uneven surface of a polypropylene-based resin foamed sheet can be produced.

The ratio of the outer diameter of the inner die at the opening of the circular die to the outer diameter of the cooling mandrel's end on the extruder's side [(outer diameter of inner die) / (outer diameter of cooling mandrel' s end on the extruder' s side)], namely a blow-up ratio, is preferably from 2.5 to 3.5.

If the amount of the inorganic filler fed to the first extruder is too small, the light reflectance of a resulting foamed sheet for a reflector may be low. On the other hand, if it is too large, it may be impossible to obtain a good-quality polypropylene-based resin foamed sheet due to the inhibition of the growth of cells during extrusion foaming, or rough-grained cells are formed in a polypropylene-based resin foamed sheet and therefore the surface roughness Ra of an uneven surface of the polypropylene-based resin foamed sheet becomes too large and, as a result, the light reflectance of a resulting foamed sheet for a reflector may be low. Therefore, the amount of the inorganic filler fed to the first extruder is preferably from 5 to 30 parts by weight, more preferably from 5 to 25 parts by weight, and particularly preferably from 10 to 20 parts by weight based on 100 parts by weight of the polypropylene-based resin.

If the amount of the inorganic filler fed to the second extruder is too small, the light reflectance of a resulting foamed sheet for a reflector may be low. On the other hand, if it is too large, the inorganic filler tends to agglomerate in the extruder and, as a result, a resulting polypropylene-based resin non-foamed sheet may have unevenness in its surface or the appearance thereof may be deteriorated. Therefore, the amount of the inorganic filler fed to the second extruder is preferably from 10 to 150 parts by weight, more preferably from 15 to 100 parts by weight, and particularly preferably from 20 to 80 parts by weight based on 100 parts by weight of the polypropylene-based resin.

The foaming agent is not particularly restricted. Examples thereof include organic gases, such as saturated aliphatic hydrocarbons, e.g. propane, butane and pentane, and halogenated hydrocarbons, e.g. tetrafluoroethane, chlorodifluoroethane and difluoroethane; gaseous inorganic compounds such as carbon dioxide and nitrogen gas; liquid inorganic compounds such as water; mixtures of an organic acid or a salt thereof with a bicarbonate, such as a mixture of sodium bicarbonate with citric acid; and solid foaming agents such as dinitrosopentamethylenetetramine. It is preferable to use a mixture of an organic acid or a salt thereof and a bicarbonate together with an organic gas. It is more preferable to use a mixture of sodium bicarbonate and citric acid together with an organic gas.

In order to make it easy to adjust the average cell diameter of the polypropylene-based resin foamed sheet 1 to from 50 to 650 µm, it is preferable to use a cell regulator together. Examples of the cell regulator include talc, clay, silica, polytetrafluoroethylene and stearic acid ethylenebisamide.

If the amount of the foaming agent fed to an extruder is too small, the expansion ratio of a resulting polypropylene-based resin foamed sheet becomes small, resulting in reduction in the number of cells in the polypropylene-based resin foamed sheet. As a result, the diffusion reflection of light at the interface between the polypropylene-based resin constituting the polypropylene-based resin foamed sheet and the air in cells is reduced and, therefore, the light reflectance of a resulting foamed sheet for a reflector may be low. On the other hand, if it is too large, the open cell ratio of a resulting polypropylene-based resin foamed sheet becomes high due to the occurrence of cell rupture during the foaming of the foamable polypropylene-based resin composition. As a result, the strength of a resulting foamed sheet for a reflector may be low or corrugation may occur during extrusion foaming. Therefore, the amount of the foaming agent fed to an extruder is preferably from 0.4 to 4.0 parts by weight, and more preferably from 0.5 to 3.5 parts by weight based on 100 parts by weight of the polypropylene-based resin.

The strip-shaped foamed sheet for a reflector obtained by the extrusion foaming through the die mounted to the end of the extruder as described above is wound continuously around a winding shaft. During this operation, the speed ratio of the extrusion speed through the die to the winding speed of the foamed sheet for a reflector around the winding shaft may be adjusted if necessary so that the inorganic filler will be contained in the foamed sheet for a reflector at a rate of from 50 to 200 g/m², in addition to the adjustment of the compounding ratio of the inorganic filler to the polypropylene-based resin.

It is not necessary to feed the polypropylene-based resin, the inorganic filler and the foaming agent concurrently to the extruder and they may be fed to the extruder separately.

When polypropylene-based resin non-foamed sheets are integrally laminated on both surfaces of a polypropylene-based resin foamed sheet, a foamed sheet for a reflector can be produced by, in the above-mentioned production method, dividing the polypropylene-based resin extruded from the second extruder into two divisions, feeding both the two divisions of the polypropylene-based resin separately to the joining die of the coextrusion die, producing a foamable laminate formed by laminating, on the outer peripheral surface of an inner polypropylene-based resin composition layer circular in cross section composed of one of the non-foamable polypropylene-based resin extruded from the second extruder, a foamable polypropylene-based resin composition layer and an outer polypropylene-based resin composition layer formed of the other non-foamable polypropylene-based resin extruded from the second extruder one on another, feeding this foamable laminate to the circular die, extrusion foaming it into a cylindrical form through the circular die to obtain a cylindrical foamed article, and slitting and opening the cylindrical foamed article into a sheet form in the same procedure as previously described.

Although in the above the case of dividing the polypropylene-based resin extruded from the second extruder into two divisions is described, it is also permitted, instead of dividing the polypropylene-based resin extruded from the second extruder into two divisions, to provide a third extruder separately from the first and the second extruder to connect the third extruder to the joining die of the coextrusion die, then feed a polypropylene-based resin to the third extruder together with an inorganic filler if necessary and melt-knead it in the absence of a foaming agent, and thereafter extrude the non-foamable polypropylene-based resin to the joining die of the coextrusion die.

Further, a method for producing a foamed sheet for a reflector in which the polypropylene-based resin non-foamed sheet 4 is further integrally laminated on the polypropylene-based resin non-foamed sheet 3 is described. First, three extruders, namely, a first extruder, a second extruder and a third extruder, and a coextrusion die composed of a joining die and a circular die connected to the joining die are prepared. The first extruder, the second extruder and the third extruder are all connected to the joining die of the coextrusion die.

A polypropylene-based resin, an inorganic filler and a foaming agent are fed to the first extruder, and they are melt-kneaded to produce a foamable polypropylene-based resin composition. A polypropylene-based resin constituting the polypropylene-based resin non-foamed sheet 3 is fed, together with an inorganic filler if necessary, into the second extruder and it is melt-kneaded in the absence of a foaming agent. A polypropylene-based resin constituting the polypropylene-based resin non-foamed sheet 4 is fed, together with an inorganic filler if necessary, into the third extruder and it is melt-kneaded in the absence of a foaming agent.

Then, the molten resins extruded from the first extruder, the second extruder and the third extruder are joined in the joining die of the coextrusion die to form a foamable laminate in which a foamable polypropylene-based resin composition layer circular in cross section, a non-foamable polypropylene-based resin composition layer for constituting the polypropylene-based resin non-foamed sheet 3 on the outer peripheral surface of the foamable polypropylene-based resin composition layer, and a non-foamable polypropylene-based resin composition layer for constituting the polypropylene-based resin non-foamed sheet 4 are integrally laminated one on another. The foamable laminate is fed to the circular die and it is extrusion foamed into a cylindrical form through the circular die. Thus, a cylindrical foamed article is obtained. A foamed sheet for a reflector can be produced by slitting and opening the resulting cylindrical foamed article into a sheet form in the same procedure as previously described.

When integrally laminating the polypropylene-based resin non-foamed sheets 3, 3 on both surfaces of the polypropylene-based resin foamed sheet 1 and integrally laminating the polypropylene-based resin non-foamed sheets 4, 4 on both the polypropylene-based resin non-foamed sheets 3, 3, the polypropylene-based resin extruded from the third extruder may be divided into two divisions or, alternatively, it is also permitted that another extruder is provided separately and the extruder is connected to the joining die of the coextrusion die like in the case of integrally laminating the polypropylene-based resin non-foamed sheets 3,3 to both surfaces of the polypropylene-based resin foamed sheet 1.

Next, a method according to a comparative example for producing a foamed sheet A for a reflector in which no polypropylene-based resin non-foamed sheets are integrally laminated on both surfaces of a polypropylene-based resin foamed sheet is described. One example of the method for producing the foamed sheet for a reflector is a production method which includes preparing a foamable polypropylene-based resin composition by feeding a polypropylene-based resin, an inorganic filler having a refractive index differing by 1.0 or more from the refractive index of the polypropylene-based resin, and a foaming agent into an extruder and melt-kneading them, and then extrusion foaming the foamable polypropylene-based resin composition through a die mounted to an end of the extruder to yield a polypropylene-based resin foamed sheet containing from 50 to 200 g/m² of the inorganic filler. The foaming agent and the amount of the foaming agent to be supplied to the extruder are the same as those previously described. The explanation thereof is therefore omitted. In order to make it easy to adjust the average cell diameter of the polypropylene-based resin foamed sheet 1 to from 50 to 650 µm, it is preferable to use a cell regulator together as in the cases described above. As such a cell regulator, ones the same as those mentioned above can be used. The explanation thereof is therefore omitted.

If the amount of the inorganic filler fed to the extruder is too small, the light reflectance of a resulting foamed sheet for a reflector may be low. On the other hand, if it is too large, it may be impossible to obtain a good-quality polypropylene-based resin foamed sheet due to the inhibition of the growth of cells during extrusion foaming, or rough-grained cells are formed in a polypropylene-based resin foamed sheet and therefore the irregularities of an uneven surface of the polypropylene-based resin foamed sheet become too large and, as a result, the light reflectance of a resulting foamed sheet for a reflector may be low. Therefore, the amount of the inorganic filler fed to the extruder is preferably from 5 to 30 parts by weight, more preferably from 5 to 25 parts by weight, and particularly preferably from 10 to 20 parts by weight based on 100 parts by weight of the polypropylene-based resin.

Next, the polypropylene-based resin, the inorganic filler and the foaming agent which were fed to the extruder are melt-kneaded to form a foamable polypropylene-based resin composition, which is then extrusion foamed through a die mounted to the end of the extruder. Such a die is not particularly restricted if it is widely used for extrusion foaming and examples thereof include a T die and a circular die.

In the case of using a T die as the die, it is possible to produce a foamed sheet for a reflector by conducting extrusion foaming to form a sheet-shaped material from the extruder. On the other hand, when using a circular die as the die, it is possible to produce a foamed sheet for a reflector by preparing a cylinder by conducting extrusion foaming to form a cylindrical form through the circular die, radially expanding the cylinder gradually, conveying it on a cooling mandrel to cool it, and slitting the cylinder along its extrusion direction continuously between the inner and outer peripheral surfaces, followed by opening and unfolding it.

The ratio of the outer diameter of the inner die at the opening of the circular die to the outer diameter of the cooling mandrel's end on the extruder's side [(outer diameter of inner die) / (outer diameter of cooling mandrel' s end on the extruder' s side)], namely the blow-up ratio, is preferably from 2.5 to 3.5.

The strip-shaped foamed sheet for a reflector obtained by the extrusion foaming through the die mounted to the end of the extruder as described above is wound continuously around a winding shaft. During this operation, the speed ratio of the extrusion speed through the die to the winding speed of the foamed sheet for a reflector around the winding shaft may be adjusted if necessary so that the inorganic filler will be contained in the foamed sheet for a reflector at a rate of from 50 to 200 g/m², in addition to the adjustment of the compounding ratio of the inorganic filler to the polypropylene-based resin.

The foamed sheet A for a reflector shown in Figs. 1 to 7 has experienced substantially no stretching treatment during its manufacturing process and its content of the inorganic filler is forced to be low. Therefore, it excels in thermoformability and the foamed sheet for a reflector of the present invention can be thermoformed into a desired shape in conformity with the shape of a light source by a widely-used thermoforming technique, resulting in a reflector, which can be used for various applications.

As a thermoforming method, widely-used thermoforming methods may be used. Examples thereof include vacuum forming and pressure forming, or applications of these forming methods such as straight forming, drape forming, plug assist forming, plug assist/reverse draw forming, air slip forming, snap-back forming, reverse draw forming, plug assist/air slip forming, match mold forming, and thermoforming methods composed of their combinations. Because a foamed sheet for a reflector shows only a little secondary expansion, it is preferable to use vacuum forming in order to prevent a resulting reflector from having a small thickness. On the other hand, when a dimensional accuracy is required like reflectors used in liquid crystal display devices, use of match mold forming is preferred.

### EFFECT OF THE INVENTION

The foamed sheet for a reflector of the present invention is defined in claim 1.

Therefore, some of the light incident on the foamed sheet A for a reflector is diffusingly reflected uniformly by the uneven surface of the polypropylene-based resin non-foamed sheet and the light which has not been diffusingly reflected on the uneven surface and has entered into the foamed sheet for a reflector significantly refracts and diffusingly.reflects at an interface between a polypropylene-based resin and an inorganic filler which have a great refractive index difference and at an interface between the polypropylene-based resin and the air in cells which also have a great refractive index difference. As a result, the foamed sheet for a reflector of the present invention has an excellent light reflecting ability.

Further, the foamed sheet for a reflector can be developed widely to various applications because its surface roughness Ra can be easily adjusted by the polypropylene-based resin non-foamed sheet so that the light reflecting ability can be exerted most effectively.

Further, in the foamed sheet for a reflector, the polypropylene-based resin foamed sheet has experienced substantially no stretching treatment and the foamed sheet for a reflector of the present invention maintains the thermoformability inherent to the polypropylene-based resin foamed sheet. As a result, the foamed sheet for a reflector can be thermoformed into a shape in conformity with a shape and an arrangement of a light source accurately and easily, and a light reflector which can reflect lights from a light source effectively can be produced easily.

The foamed sheet for a reflector according to a comparative example is characterized by being a, foamed sheet for a reflector including a polypropylene-based resin foamed sheet which has an average cell diameter of from 50 to 650 µm and at least one surface which is an uneven surface formed by cells located in the vicinity of the surface, and an inorganic filler contained in an amount of from 50 to 200 g/m² in the polypropylene-based resin foamed sheet and having a refractive index differing by 1.0 or more from a refractive index of a polypropylene-based resin constituting the polypropylene-based resin foamed sheet, wherein the foamed sheet for a reflector has a thickness of from 0.2 to 2.0 mm and a light reflectance of 97% or more.

In other words, the foamed sheet for a reflector is characterized in that at least one surface of a polypropylene-based resin foamed sheet having an average cell diameter of from 50 to 650 µm is formed to be an uneven surface formed by cells located in the vicinity of the surface, and an inorganic filler having a refractive index differing by 1.0 or more from the refractive index of the polypropylene-based resin constituting the polypropylene-based resin foamed sheet is contained in an amount of from 50 to 200 g/m² in the polypropylene-based resin foamed sheet and that the foamed sheet for a reflector has a thickness of from 0.2 to 2.0 mm and a light reflectance of 97% or more.

Therefore, some of the light incident on the foamed sheet A for a reflector is diffusingly reflected uniformly by the uneven surface of the polypropylene-based resin non-foamed sheet and the light which has not been diffusingly reflected on the uneven surface and has entered into the foamed sheet for a reflector significantly refracts and diffusingly reflects at an interface between a polypropylene-based resin and an inorganic filler which have a great refractive index difference and at an interface between the polypropylene-based resin and the air in cells which also have a great refractive index difference. As a result, the foamed sheet for a reflector has an excellent light reflecting ability.

Further, in the foamed sheet for a reflector of the the polypropylene-based resin foamed sheet has experienced substantially no stretching treatment and the foamed sheet for a reflector maintains the thermoformability inherent to the polypropylene-based resin foamed sheet. As a result, the foamed sheet for a reflector can be thermoformed into a shape in conformity with a shape and an arrangement of a light source accurately and easily, and a light reflector which can reflect lights from a light source effectively can be produced easily.

When the inorganic filler is titanium dioxide in the above-mentioned foamed sheet for a reflector, it is possible to diffusingly reflect light certainly by refracting the light at the interface between the polypropylene-based resin and the titanium dioxide. Therefore, such a foamed sheet for a reflector has more excellent light reflecting performance.

When the titanium dioxide is the rutile-type titanium dioxide in the above-mentioned foamed sheet for a reflector, it is possible to further improve the light reflecting performance of the foamed sheet for a reflector by refracting the light more significantly at the interface between the polypropylene-based resin and the titanium dioxide.

When the uneven surface of the polypropylene-based resin non-foamed sheet in the above-mentioned foamed sheet for a reflector has a surface roughness Ra of from 0.4 to 5.0 µm, it is possible to diffusingly reflect the light incident on the foamed sheet for a reflector effectively and diffuse the light uniformly. Therefore, such a foamed sheet for a reflector has more excellent light reflecting performance.

### BRIEF DESCRIPTION OF THE DRAWINGS

[Fig. 1] A schematic longitudinal sectional view showing a foamed sheet for a reflector of the present invention.
[Fig. 2] A fragmentary enlarged view of Fig. 1.
[Fig. 3] A fragmentary enlarged view showing a comparative example of a foamed sheet for a reflector.
[Fig. 4] A schematic longitudinal sectional view showing another example of the foamed sheet for a reflector of the present invention.
[Fig. 5] A fragmentary enlarged view of Fig. 4.
[Fig. 6] A schematic longitudinal sectional view showing comparative example of a foamed sheet for a reflector.
[Fig. 7] A fragmentary enlarged view of Fig. 6.
[Fig. 8] A perspective view showing one of the reflectors obtained by thermoforming the foamed sheets for a reflector of Examples and the Comparative Examples.
[Fig. 9] A schematic view showing measuring points in the surface of a diffusion sheet in the measurement of the brightness of a reflector.

### DESCRIPTION OF THE REFERENCE NUMERALS

1 Polypropylene-based resin foamed sheet
11 Cell
12 Uneven surface
2 Inorganic filler
3 Polypropylene-based resin non-foamed sheet
31 Uneven surface
4 Polypropylene-based resin non-foamed sheet
41 Uneven surface
A Foamed sheet for reflector
B Reflector

### BEST MODE FOR CARRYING OUT THE INVENTION

### (Examples 1 to 7, Comparative Examples 1 to 3)

A tandem extruder composed of a single screw extruder (barrel diameter: 90 mm) as a first stage and another single screw extruder (barrel diameter: 115 mm) as a second stage connected to the front end of the first stage single screw extruder, and still another single screw extruder having a barrel diameter of 90 mm were prepared. The former extruder was named a first extruder and the latter extruder was named a second extruder. A coextrusion die composed of a joining die and a circular die connected to the joining die was prepared. A manufacturing apparatus in which the second stage extruder of the first extruder and the second extruder were both in connection to the joining die of the coextrusion die was prepared.

Next, a polypropylene-based resin (available under the trade name "PF814" from SunAllomer Ltd. ; refractive index: 1.5), a masterbatch (available under the trade name "SSC-04B384" from Dainichiseika Color & Chemicals Mfg. Co., Ltd.; titanium dioxide (refractive index: 2.76): 50% by weight; polypropylene-based resin: 50% by weight) composed of a polypropylene-based resin (available under the trade name "PL500A" from SunAllomer Ltd.; refractive index: 1.5) and rutile-type titanium dioxide contained in the resin, and a masterbatch (available under the trade name "HYDROCEROL HK-70" from Clariant; a mixture of sodium bicarbonate and citric acid: 70% by weight) composed of a resin and a mixture of sodium bicarbonate and citric acid contained in the resin were fed in the predetermined amounts shown in Table 1 to the first stage extruder in the first extruder, and were melt-kneaded at 200°C. Then, butane (isobutane: 35% by weight; normal butane: 65% by weight) in the amount shown in Table 1 was injected into the first stage extruder, followed by further melt-kneading. Thereby, a foamable polypropylene-based resin composition was produced. In Examples 6, 7 and Comparative Example 2, butane was not used.

In Tables 1 and 2, a masterbatch composed of a polypropylene-based resin and rutile-type titanium dioxide contained in the resin is denoted simply as an "Inorganic filler masterbatch," a mixture of sodium bicarbonate and citric acid is denoted simply as "Bicarbonate/citric acid," and a masterbatch composed of a resin and a mixture of sodium bicarbonate and citric acid contained in the resin is denoted simply as a "Bicarbonate/citric acid masterbatch." The compounding ratios of the polypropylene-based resin, titanium dioxide, a mixture of sodium bicarbonate and citric acid, and butane fed to the first extruder are shown in Table 2.

Next, the foamable polypropylene-based resin composition was fed to the second stage extruder continuously and thereby the foamable polypropylene-based resin composition was cooled to 170°C. Then, it was fed at the extrusion amount shown in Table 1 into the joining die of the coextrusion die.

On the other hand, the predetermined amounts shown in Table 1 of a non-foamable polypropylene-based resin composition composed of a polypropylene-based resin (available under the trade name "PL500A" from SunAllomer Ltd.; refractive index: 1.5) and a masterbatch (available under the trade name "SSC-04B384" from Dainichiseika Color & Chemicals Mfg. Co., Ltd. ; titanium dioxide (refractive index: 2.76) : 50% by weight; polypropylene-based resin: 50% by weight) composed of a polypropylene-based resin (available under the trade name "PL500A" from SunAllomer Ltd.) and rutile-type titanium dioxide contained in the resin was fed into the second extruder, and was melt-kneaded at 200°C. Then, the non-foamable polypropylene-based resin composition in a molten state was extruded from the second extruder at the extrusion amount shown in Table 1 and the non-foamable polypropylene-based resin composition extruded was divided equally into two divisions and then fed into the joining die of the coextrusioin die. The compounding ratios of the polypropylene-based resin and titanium dioxide fed to the second extruder are shown in Table 2.

In the joining die of the coextrusion die, a foamable laminate was formed in which on the outer peripheral surface of the inner polypropylene-based resin composition layer circular in cross section composed of one division of the non-foamable polypropylene-based resin composition extruded from the second extruder, the foamable polypropylene-based resin composition layer extruded from the first extruder and the outer polypropylene-based resin composition layer composed of the other division of the non-foamable polypropylene-based resin composition extruded from the second extruder were laminated one on another.

The foamable laminate was fed continuously into the circular die of the coextrusion die to be shaped into a cylindrical form and the resulting cylindrical foamable laminate was extrusion foamed through the circular die of the coextrusion die. Thereby, a cylinder was produced continuously in which polypropylene-based resin non-foamed layers composed of the inner and outer polypropylene-based resin composition layers were integrally laminated on the inner and outer peripheral surfaces of the polypropylene-based resin foamed layer formed by foaming the foamable polypropylene-based resin composition layer. At the opening of the circular die, the die had an outer diameter of the inner die of 140 mm and a slit clearance of 0.8 mm.

Subsequently, the cylinder was taken-off at a predetermined take-off speed and simultaneously was radially expanded gradually. Then, the cylinder was conveyed on a columnar cooling mandrel (diameter: 424 mm, length: 500 mm) inside which 25°C water was circulated and simultaneously 25°C cooling wind was blown to the outer peripheral surface of the cylinder to cool it. The cylinder was then slit at its two points along its extrusion direction continuously between the inner and outer peripheral surfaces, and thereby opened and unfolded into a sheet form. Thus, a foamed sheet for a reflector was obtained. Through adjustment of the take-off speed of the cylinder and the extrusion speed thereof from the coextrusion die, the thicknesses of the polypropylene-based resin foamed sheet 1 and the polypropylene-based resin non-foamed sheets 3a, 3b, the expansion ratio of the polypropylene-based resin foamed sheet 1 and the inorganic filler amounts in the polypropylene-based resin foamed sheet 1 and the polypropylene-based resin non-foamed sheets 3a, 3b were adjusted.

In the resulting foamed sheet for a reflector, both surfaces of the polypropylene-based resin foamed sheet 1 had been formed to be uneven surfaces 12, 12. On both the uneven surfaces 12, 12 of the polypropylene-based resin foamed sheet 1, the polypropylene-based resin non-foamed sheets 3a, 3b had been integrally laminated in conformity with the uneven surfaces 12, 12 of the polypropylene-based resin foamed sheet 1 and the surfaces of the polypropylene-based resin non-foamed sheets 3a, 3b had been formed to be uneven surfaces 31, 31. The polypropylene-based resin non-foamed sheets 3a, 3b integrally laminated on the surfaces of the polypropylene-based resin foamed sheet 1 had the same thickness.

### (Examples 8, 9)

The manufacturing apparatus used in Example 1 was prepared. Next, a polypropylene-based resin (available under the trade name "PF814" from SunAllomer Ltd. ; refractive index: 1.5), a masterbatch (available under the trade name "PPM 1KB 622 WHT FD" from Toyo Ink Mfg. Co., Ltd.; titanium dioxide (refractive index: 2.76): 70% by weight; polypropylene-based resin: 30% by weight) composed of a polypropylene-based resin (available under the trade name "PL500A" from SunAllomer Ltd.; refractive index: 1.5) and rutile-type titanium dioxide contained in the resin, and a masterbatch (available under the trade name "HYDROCEROL HK-70" from Clariant; a mixture of sodium bicarbonate and citric acid: 70% by weight) composed of a resin and a mixture of sodium bicarbonate and citric acid contained in the resin were fed in the predetermined amounts shown in Table 1 to the first stage extruder in the first extruder, and were melt-kneaded at 200°C. Thus, a foamable polypropylene-based resin composition was produced. The compounding ratios of the polypropylene-based resin, titanium dioxide, and a mixture of sodium bicarbonate and citric acid fed to the first extruder are shown in Table 2.

Next, the foamable polypropylene-based resin composition was fed to the second stage extruder continuously and thereby the foamable polypropylene-based resin composition was cooled to 170°C. Then, it was fed at the extrusion amount shown in Table 1 into the joining die of the coextrusion die.

On the other hand, the predetermined amounts shown in Table 1 of a non-foamable polypropylene-based resin composition composed of a polypropylene-based resin (available under the trade name "PL500A" from SunAllomer Ltd. ; refractive index: 1.5) and a masterbatch (available under the trade name "PPM 1KB 622 WHT FD" from Toyo Ink Mfg. Co., Ltd.; titanium dioxide (refractive index: 2.76): 70% by weight; polypropylene-based resin: 30% by weight) composed of a polypropylene-based resin (available under the trade name "PL500A" from SunAllomer Ltd.) and rutile-type titanium dioxide contained in the resin was fed into the second extruder, and was melt-kneaded at 200°C. Then, the non-foamable polypropylene-based resin composition in a molten state was extruded from the second extruder at the extrusion amount shown in Table 1 and the non-foamable polypropylene-based resin composition extruded was fed into the joining die of the coextrusioin die. The compounding ratios of the polypropylene-based resin and titanium dioxide fed to the second extruder are shown in Table 2.

In the joining die of the coextrusion die, a foamable laminate was formed in which on the outer peripheral surface of the foamable polypropylene-based resin composition layer circular in cross section extruded from the first extruder, a polypropylene-based resin composition layer composed of the non-foamable polypropylene-based resin composition extruded from the second extruder was laminated.

The foamable laminate was fed continuously into the circular die of the coextrusion die to be shaped into a cylindrical form and the resulting cylindrical foamable laminate was extrusion foamed through the circular die of the coextrusion die. Thereby, a cylinder was produced continuously in which a polypropylene-based resin non-foamed layer composed of the polypropylene-based resin composition layer was integrally laminated on the outer peripheral surface of the polypropylene-based resin foamed layer formed by foaming the foamable polypropylene-based resin composition layer. At the opening of the circular die, the die had an outer diameter of the inner die of 140 mm and a slit clearance of 0.8 mm.

Subsequently, the cylinder was taken-off at a predetermined take-off speed and simultaneously was radially expanded gradually. Then, the cylinder was conveyed on a columnar cooling mandrel (diameter: 424 mm, length: 500 mm) inside which 25°C water was circulated and simultaneously 25°C cooling wind was blown to the outer peripheral surface of the cylinder to cool it. The cylinder was then slit at its two points along its extrusion direction continuously between the inner and outer peripheral surfaces, and thereby opened and unfolded into a sheet form. Thus, a foamed sheet for a reflector was obtained. Through adjustment of the take-off speed of the cylinder and the extrusion speed thereof from the coextrusion die, the thicknesses of the polypropylene-based resin foamed sheet 1 and the polypropylene-based resin non-foamed sheet 3a, the expansion ratio of the polypropylene-based resin foamed sheet 1 and the inorganic filler amounts in the polypropylene-based resin foamed sheet 1 and the polypropylene-based resin non-foamed sheet 3a were adjusted.

In the resulting foamed sheet for a reflector, both surfaces of the polypropylene-based resin foamed sheet 1 had been formed to be uneven surfaces 12, 12. On only one uneven surface 12 of the polypropylene-based resin foamed sheet 1, the polypropylene-based resin non-foamed sheet 3a had been integrally laminated in conformity with the uneven surface 12 of the polypropylene-based resin foamed sheet 1 and the surface of the polypropylene-based resin non-foamed sheet 3a had been formed to be an uneven surface 31.

### (Examples 10, 11)

The tandem extruder used in Example 1 and two single screw extruders each having a barrel diameter of 90 mm were prepared. The former extruder was named a first extruder and the latter extruders were named a second extruder and a third extruder. A coextrusion die composed of a joining die and a circular die connected to the joining die was prepared. A manufacturing apparatus in which the second stage extruder of the first extruder, the second extruder and the third extruder were in connection to the joining die of the coextrusion die was prepared.

Next, a polypropylene-based resin (available under the trade name "PF814" from SunAllomer Ltd. ; refractive index: 1.5), a masterbatch (available under the trade name "SSC-04B384" from Dainichiseika Color & Chemicals Mfg. Co., Ltd.; titanium dioxide (refractive index: 2.76): 50% by weight; polypropylene-based resin: 50% by weight) composed of a polypropylene-based resin (available under the trade name "PL500A" from SunAllomer Ltd.; refractive index: 1.5) and rutile-type titanium dioxide contained in the resin, and a masterbatch (available under the trade name "HYDROCEROL HK-70" from Clariant; a mixture of sodium bicarbonate and citric acid: 70% by weight) composed of a resin and a mixture of sodium bicarbonate and citric acid contained in the resin were fed in the predetermined amounts shown in Table 1 to the first stage extruder in the first extruder, and were melt-kneaded at 200°C. Thus, a foamable polypropylene-based resin composition was produced. The compounding ratios of the polypropylene-based resin, titanium dioxide, and a mixture of sodium bicarbonate and citric acid fed to the first extruder are shown in Table 2.

Next, the foamable polypropylene-based resin composition was fed to the second stage extruder continuously and thereby the foamable polypropylene-based resin composition was cooled to 170°C. Then, it was fed at the extrusion amount shown in Table 1 into the joining die of the coextrusion die.

On the other hand, the predetermined amounts shown in Table 1 of a non-foamable polypropylene-based resin composition composed of a polypropylene-based resin (available under the trade name "PL500A" from SunAllomer Ltd.; refractive index: 1.5) and a masterbatch (available under the trade name "SSC-04B384" from Dainichiseika Color & Chemicals Mfg. Co., Ltd. ; titanium dioxide (refractive index: 2.76) : 50% by weight; polypropylene-based resin: 50% by weight) composed of a polypropylene-based resin (available under the trade name "PL500A" from SunAllomer Ltd.) and rutile-type titanium dioxide contained in the resin was fed into the second extruder, and was melt-kneaded at 200°C. Then, the non-foamable polypropylene-based resin composition in a molten state was extruded from the second extruder at the extrusion amount shown in Table 1 and the non-foamable polypropylene-based resin composition extruded was fed into the joining die of the coextrusioin die. The compounding ratios of the polypropylene-based resin and titanium dioxide fed to the second extruder are shown in Table 2.

On the other hand, a polypropylene-based resin (available under the trade name "PL500A" from SunAllomer Ltd.; refractive index: 1.5) was fed into the third extruder, and was melt-kneaded at 200°C. Then, the non-foamable polypropylene-based resin in a molten state was extruded from the third extruder at the extrusion amount shown in Table 1 and the non-foamable polypropylene-based resin extruded was fed into the joining die of the coextrusioin die.

In the joining die of the coextrusion die, a foamable laminate was formed in which on the outer peripheral surface of the foamable polypropylene-based resin composition layer circular in cross section extruded from the first extruder, a polypropylene-based resin composition layer composed of the non-foamable polypropylene-based resin composition extruded from the second extruder and a polypropylene-based resin layer composed of the polypropylene-based resin extruded from the third extruder were laminated one on another.

The foamable laminate was fed continuously into the circular die of the coextrusion die to be shaped into a cylindrical form and the resulting cylindrical foamable laminate was extrusion foamed through the circular die of the coextrusion die. Thereby, a cylinder was produced continuously. In this cylinder, on the outer peripheral surface of the polypropylene-based resin foamed layer formed by foaming a foamable polypropylene-based resin composition layer, a first polypropylene-based resin non-foamed layer composed of a polypropylene-based resin composition layer and a second polypropylene-based resin non-foamed layer composed of a polypropylene-based resin layer had been integrally laminated one on another. At the opening of the circular die, the die had an outer diameter of the inner die of 140 mm and a slit clearance of 0.8 mm.

Subsequently, the cylinder was taken-off at a predetermined take-off speed and simultaneously was radially expanded gradually. Then, the cylinder was conveyed on a columnar cooling mandrel (diameter: 424 mm, length: 500 mm) inside which 25°C water was circulated and simultaneously 25°C cooling wind was blown to the outer peripheral surface of the cylinder to cool it. The cylinder was then slit at its two points along its extrusion direction continuously between the inner and outer peripheral surfaces, and thereby opened and unfolded into a sheet form. Thus, a foamed sheet for a reflector was obtained. Through adjustment of the take-off speed of the cylinder and the extrusion speed thereof from the coextrusion die, the thicknesses of the polypropylene-based resin foamed sheet 1 and the polypropylene-based resin non-foamed sheets 3a, 4, the expansion ratio of the polypropylene-based resin foamed sheet 1 and the inorganic filler amounts in the polypropylene-based resin foamed sheet 1 and the polypropylene-based resin non-foamed sheet 3a were adjusted.

In the resulting foamed sheet for a reflector, both surfaces of the polypropylene-based resin foamed sheet 1 had been formed to be uneven surfaces 12, 12. On one uneven surface 12 of the polypropylene-based resin foamed sheet 1, the polypropylene-based resin non-foamed sheet 3a and the polypropylene-based resin non-foamed sheet 4 had been integrally laminated in this order in conformity with the uneven surface 12 of the polypropylene-based resin foamed sheet 1. The surface of the polypropylene-based resin non-foamed sheet 4 had been formed to be an uneven surface 41.

### (Examples 12, 13)

The manufacturing apparatus used in Example 1 was prepared. Next, a polypropylene-based resin (available under the trade name "PF814" from SunAllomer Ltd. ; refractive index: 1.5), a masterbatch (available under the trade name "SSC-04B384" from Dainichiseika Color & Chemicals Mfg. Co., Ltd. ; titanium dioxide (refractive index: 2.76) : 50% by weight; polypropylene-based resin: 50% by weight) composed of a polypropylene-based resin (available under the trade name "PL500A" from SunAllomer Ltd.; refractive index: 1.5) and rutile-type titanium dioxide contained in the resin, and a masterbatch (available under the trade name "HYDROCEROL HK-70" from Clariant; a mixture of sodium bicarbonate and citric acid: 70% by weight) composed of a resin and a mixture of sodium bicarbonate and citric acid contained in the resin were fed in the predetermined amounts shown in Table 1 to the first stage extruder in the first extruder, and were melt-kneaded at 200°C. Thus, a foamable polypropylene-based resin composition was produced. The compounding ratios of the polypropylene-based resin, titanium dioxide, and a mixture of sodium bicarbonate and citric acid fed to the first extruder are shown in Table 2.

Next, the foamable polypropylene-based resin composition was fed to the second stage extruder continuously and thereby the foamable polypropylene-based resin composition was cooled to 170°C. Then, it was fed at the extrusion amount shown in Table 1 into the joining die of the coextrusion die.

On the other hand, the predetermined amounts shown in Table 1 of a non-foamable polypropylene-based resin composition composed of a polypropylene-based resin (available under the trade name "PL500A" from SunAllomer Ltd.; refractive index: 1.5) and a masterbatch (available under the trade name "SSC-04B384" from Dainichiseika Color & Chemicals Mfg. Co., Ltd. ; titanium dioxide (refractive index: 2.76) : 50% by weight; polypropylene-based resin: 50% by weight) composed of a polypropylene-based resin (available under the trade name "PL500A" from SunAllomer Ltd.) and rutile-type titanium dioxide contained in the resin was fed into the second extruder, and was melt-kneaded at 200°C. Then, the non-foamable polypropylene-based resin composition in a molten state was extruded from the second extruder at the extrusion amount shown in Table 1 and the non-foamable polypropylene-based resin composition extruded was divided equally into two divisions and then fed into the joining die of the coextrusioin die. The compounding ratios of the polypropylene-based resin and titanium dioxide fed to the second extruder are shown in Table 2.

On the other hand, a polypropylene-based resin (available under the trade name "PL500A" from SunAllomer Ltd.; refractive index: 1.5) was fed into the third extruder, and was melt-kneaded at 200°C. Then, the non-foamable polypropylene-based resin in a molten state was extruded from the third extruder at the extrusion amount shown in Table 1 and the non-foamable polypropylene-based resin extruded was fed into the joining die of the coextrusioin die.

In the joining die of the coextrusion die, a foamable laminate was formed in which on the outer peripheral surface of the inner polypropylene-based resin composition layer circular in cross section composed of one division of the non-foamable polypropylene-based resin composition extruded from the second extruder, the foamable polypropylene-based resin composition layer extruded from the first extruder, the outer polypropylene-based resin composition layer composed of the other division of the non-foamable polypropylene-based resin composition extruded from the second extruder, and the polypropylene-based resin layer composed of the polypropylene-based resin extruded from the third extruder were laminated one on another.

The foamable laminate was fed continuously into the circular die of the coextrusion die to be shaped into a cylindrical form and the resulting cylindrical foamable laminate was extrusion foamed through the circular die of the coextrusion die. Thereby, a cylinder was produced continuously. In this cylinder, on the inner and outer peripheral surfaces of the polypropylene-based resin foamed layer formed by foaming a foamable polypropylene-based resin composition layer, first inner and outer polypropylene-based resin non-foamed layers composed of the inner and outer polypropylene-based resin composition layers have been integrally laminated. Further, on the outer peripheral surface of the first outer polypropylene-based resin non- foamed layer, a second polypropylene-based resin non-foamed layer composed of a polypropylene-based resin layer had been integrally laminated. At the opening of the circular die, the die had an outer diameter of the inner die of 140 mm and a slit clearance of 0.8 mm.

Subsequently, the cylinder was taken-off at a predetermined take-off speed and simultaneously was radially expanded gradually. Then, the cylinder was conveyed on a columnar cooling mandrel (diameter: 424 mm, length: 500 mm) inside which 25°C water was circulated and simultaneously 25°C cooling wind was blown to the outer peripheral surface of the cylinder to cool it. The cylinder was then slit at its two points along its extrusion direction continuously between the inner and outer peripheral surfaces, and thereby opened and unfolded into a sheet form. Thus, a foamed sheet for a reflector was obtained. Through adjustment of the take-off speed of the cylinder and the extrusion speed thereof from the coextrusion die, the thicknesses of the polypropylene-based resin foamed sheet 1 and the polypropylene-based resin non-foamed sheets 3a, 3b, 4, the expansion ratio of the polypropylene-based resin foamed sheet 1 and the inorganic filler amounts in the polypropylene-based resin foamed sheet 1 and the polypropylene-based resin non-foamed sheets 3a, 3b, 4 were adjusted.

In the resulting foamed sheet for a reflector, both surfaces of the polypropylene-based resin foamed sheet 1 had been formed to be uneven surfaces 12, 12. On both the uneven surfaces 12, 12 of the polypropylene-based resin foamed sheet 1, the polypropylene-based resin non-foamed sheets 3a, 3b had been integrally laminated in conformity with the uneven surfaces 12, 12 of the polypropylene-based resin foamed sheet 1 and the surfaces of the polypropylene-based resin non-foamed sheets 3a, 3b had been formed to be uneven surfaces 31, 31. Further, on one polypropylene-based resin non-foamed sheet 3a, a polypropylene-based resin non-foamed sheet 4 had been integrally laminated in conformity with the uneven surface 31 of the polypropylene-based resin non-foamed sheet 3a. The surface of the polypropylene-based resin non-foamed sheet 4 had been formed to be an uneven surface 41. The polypropylene-based resin non-foamed sheets 3a, 3b integrally laminated on the surfaces of the polypropylene-based resin foamed sheet 1 had the same thickness.

### (Comparative Example 4)

A foamed sheet for a reflector was produced in the same manner as in Example 1 except for changing the titanium dioxide in the masterbatch used in the production of the polypropylene-based resin foamed sheet and the polypropylene-based resin non-foamed sheet to barium sulfate (refractive index: 1.65).

The overall density, overall thickness and light reflectance of the obtained foamed sheet for a reflector, the average cell diameter of the polypropylene-based resin foamed sheet 1 (expressed as "Foamed sheet" in Table 3), the content of titanium dioxide in the polypropylene-based resin foamed sheet 1 and the polypropylene-based resin non-foamed sheets 3a, 3b (expressed as "Non-foamed sheet" in Table 3), the thickness of the polypropylene-based resin non-foamed sheets 3a, 3b, 4, the basis weight of the foamed sheet 1 and the non-foamed sheets 3a, 3b, 4, and the surface roughness Ra of the uneven surface of the polypropylene-based resin non-foamed sheet 3a or the polypropylene-based resin non-foamed sheet 4 are shown in Table 3.

In the column of "Layer constitution" in Table 3, "1" means a polypropylene-based resin foamed sheet, "3a" and "3b" each mean a polypropylene-based resin non-foamed sheet integrally laminated on the surface of the polypropylene-based resin foamed sheet 1, and "4" means a polypropylene-based resin non-foamed sheet integrally laminated on the polypropylene-based resin non-foamed sheet 3a.

### (Examples 14 to 17, Comparative Examples 5 to 7)

The Examples 14 to 17 do not form part of the invention. A manufacturing apparatus was prepared which includes a tandem extruder composed of a single screw extruder (barrel diameter: 90 mm) as a first stage and another single screw extruder (barrel diameter: 115 mm) as a second stage connected to the front end of the first stage single screw extruder and further includes a circular die mounted to the front end of the second stage single screw extruder of the tandem extruder.

Next, a polypropylene-based resin (available under the trade name "PF814" from SunAllomer Ltd. ; refractive index: 1.5), a masterbatch (available under the trade name "SSC-04B384" from Dainichiseika Color & Chemicals Mfg. Co., Ltd.; titanium dioxide (refractive index: 2.76): 50% by weight; polypropylene-based resin: 50% by weight) composed of a polypropylene-based resin (available under the trade name "PL500A" from SunAllomer Ltd.; refractive index: 1.5) and rutile-type titanium dioxide contained in the resin, and a masterbatch (available under the trade name "HYDROCEROL HK-70" from Clariant; a mixture of sodium bicarbonate and citric acid: 70% by weight) composed of a resin and a mixture of sodium bicarbonate and citric acid contained in the resin were fed in the predetermined amounts shown in Table 4 to the first stage extruder, and were melt-kneaded at 200°C. Then, butane (isobutane: 35% by weight; normal butane: 65% by weight) in the predetermined amount shown in Table 4 was injected into the first stage extruder, followed by further melt-kneading. Thereby, a foamable polypropylene-based resin composition was produced. In Example 17 and Comparative Example 5, butane was not used.

In the table, a masterbatch composed of a polypropylene-based resin and rutile-type titanium dioxide contained in the resin is denoted simply as an "Inorganic filler masterbatch," a mixture of sodium bicarbonate and citric acid is denoted simply as "Bicarbonate/citric acid," and a masterbatch composed of a resin and a mixture of sodium bicarbonate and citric acid contained in the resin is denoted simply as a "Bicarbonate/citric acid masterbatch." The compounding ratios of the polypropylene-based resin, titanium dioxide, a mixture of sodium bicarbonate and citric acid, and butane fed to the extruder are shown in Table 5.

Next, the foamable polypropylene-based resin composition was fed to the second stage extruder continuously and thereby the foamable polypropylene-based resin composition was cooled to 170°C. Then, it was extrusion foamed into a cylindrical form from the circular die at an extrusion amount of 100 kg/hr. Thus, a cylinder was produced continuously. At the opening of the circular die, the die had an outer diameter of the inner die of 140 mm and a slit clearance of 0.7 mm.

Subsequently, the cylinder was taken-off at a predetermined take-off speed and simultaneously was radially expanded gradually. Then, the cylinder was conveyed on a columnar cooling mandrel (diameter: 424 mm, length: 500 mm) inside which 25°C water was circulated and simultaneously 25°C cooling wind was blown to the outer peripheral surface of the cylinder to cool it. The cylinder was then slit at its two points along its extrusion direction continuously between the inner and outer peripheral surfaces, and thereby opened and unfolded into a sheet form. Thus, a foamed sheet for a reflector was obtained, both surfaces of which have been formed to be uneven surfaces by cells located in the vicinity of the surfaces.

### (Comparative Example 8)

A foamed sheet for a reflector was produced in the same manner as in Example 1 except for using barium sulfate (refractive index: 1.65) instead of rutile-type titanium dioxide.

The density, thickness, light reflectance, average cell diameter, content of titanium dioxide or barium sulfate, and basis weight of the resulting foamed sheet for a reflector are shown in Table 6.

The resulting foamed sheet for a reflector was heated so that the temperature of the both surfaces thereof became 150°C. Then, the foamed sheet for a reflector was molded into a shape shown in Fig. 8 by use of the match mold molding technique. Thus, a flat rectangular reflector B 295 mm in length and 215 mm in width was obtained. The forming accuracy and the strength of the reflector B were measured in the following procedures and the results are shown in Tables 3 and 6. In each of the foamed sheets for a reflector of Examples 1 to 13 and Comparative Examples 1 to 4, the sheet was arranged so that the polypropylene-based resin non-foamed sheet 3a or 4 side was the incident surface of light.

### (Forming Accuracy)

The reflector B was visually observed and the judgment was made based on the following criteria.
○: The reflector was formed in conformity with the shape of the mold.
Δ: The reflector was not formed in conformity with the shape of mold at some portions of the reflector, for example, at corners of the mold.
×: Throughout the reflector, it failed to be formed in conformity with the shape of the mold.

### (Strength)

A margin of a longer side of the reflector B was fixed on the horizontal plane and the remaining part of the reflector B except the fixed margin of the longer side (fixed edge) was left free. When the free end of the reflector B (i.e., the margin of the opposite edge of the fixed edge in the reflector) was displaced perpendicularly under the horizontal plane, the displacement amount C₁ was measured. Next, the displacement amount C₂ was measured in the same manner while a margin of a shorter side of the reflector B was fixed on the horizontal plane.

For the larger displacement amount C selected from the displacement amounts C₁ and C₂, the judgment was made based on the following criteria.
○: The displacement amount C was less than 5 cm.
Δ: The displacement amount C was 5 cm or more but less than 10 cm.
×: The displacement amount C was 10 cm or more.

### (Brightness Evaluation)

Using the reflectors B obtained from the foamed sheets for a reflector of Examples 1 to 13 and Comparative Examples 1 to 4, the brightness evaluation was conducted in the following manner. A measuring unit was prepared in which a reflector B was arranged on the back side of a back light unit for liquid crystals which had an effective display size of 435 mm × 330 mm and was equipped with 16 cold-cathode tubes and, on the front side of the back light unit for liquid crystals, a diffuser plate, a diffusion sheet, a prism sheet and another diffusion sheet were disposed in this order.

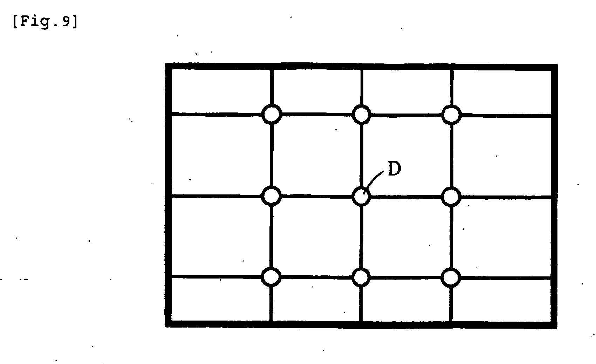

On the surface of the diffusion sheet of the measuring unit, imaginary straight lines parallel to the sides of the diffusion sheet were drawn in a lattice at 10 cm intervals as shown in Fig. 9. The brightness at nine intersections on the lattice was measured with a color brightness meter (trade name "BM-7" produced by TOPCON TECHNOHOUSE CORPORATION). The arithmetic mean value of the brightnesses at the intersections was used as the brightness. Adjustment was made so that the intersection D was located on the intersection of the diagonal ) lines of the diffusion sheet.

**[Table 1]**

| | Foamable polypropylene-based resin composition (parts by weight) | | | | | Non-foamable polypropylene-based resin composition | | | Polypropylene-based resin | |
|---|---|---|---|---|---|---|---|---|---|---|
| | Polypropylene-based resin (parts by weight) | Inorganic filler masterbatch (parts by weight) | Foaming agent (parts by weight) | | Extrusion amount (kg/hr) | Polypzopylene-based resin (parts by weight) | Inorganic filler masterbatch (parts by weight) | Extrusion amount (kg/hr) | Polypropylene -based resin (parts by weight) | Extrusion amount (kg/hr) |
| | | | Bicarbonate/ citric acid masterbatch | Butane | | | | | | |
| Example 1 | 70 | 30 | 1.0 | 1.5 | 100 | 60 | 40 | 25 | - | - |
| Example 2 | 70 | 30 | 0.2 | 2.5 | 100 | 60 | 40 | 50 | - | - |
| Example 3 | 70 | 30 | 1.0 | 1.0 | 100 | 60 | 40 | 50 | - | - |
| Example 4 | 70 | 30 | 1.0 | 1.0 | 100 | 60 | 40 | 50 | - | - |
| Example 5 | 70 | 30 | 1.2 | 1.0 | 100 | 40 | 60 | 50 | - | - |
| Example 6 | 70 | 30 | 1.5 | - | 100 | 16 | 84 | 50 | - | - |
| Example 7 | 70 | 30 | 1.5 | - | 100 | 16 | 84 | 50 | - | - |
| Example 8 | 80 | 20 | 1.5 | - | 100 | 40 | 60 | 50 | - | - |
| Example 9 | 80 | 20 | 1.5 | - | 100 | 40 | 60 | 50 | - | - |
| Example 10 | 70 | 30 | 1.5 | - | 100 | 40 | 60 | 50 | 100 | 10 |
| Example 11 | 70 | 30 | 1.5 | - | 100 | 16 | 84 | 50 | 100 | 10 |
| Example 12 | 70 | 30 | 1.5 | - | 100 | 40 | 60 | 50 | 100 | 10 |
| Example 13 | 70 | 30 | 1.5 | - | 100 | 40 | 60 | 50 | 100 | 10 |
| Comparative Example 1 | 70 | 30 | 0.2 | 3.5 | 100 | 40 | 60 | 35 | - | - |
| Comparative Example 2 | 60 | 40 | 1.2 | - | 70 | 50 | 50 | 70 | - | - |
| Comparative Example 3 | 90 | 10 | 1.0 | 1.5 | 100 | 60 | 40 | 25 | - | - |
| Comparative Example 4 | 70 | 30 | 1.0 | 1.5 | 100 | 60 | 40 | 25 | - | - |

**[Table 2]**

| | Foamable polypropylene-based resin composition (parts by weight) | | | | Non-foamable polypropylene-based resin composition (parts by weight) | | Polypropylene-based resin (parts by weight) |
|---|---|---|---|---|---|---|---|
| | Polypropylene-based resin | Inorganic filler | Foaming agent | | Polypropylene-based resin | Inorganic filler | |
| | | | Bicarbonate/ citric acid | Butane | | | |
| Example 1 | 100 | 17.6 | 0.82 | 1.76 | 100 | 25.0 | - |
| Example 2 | 100 | 17.6 | 0.16 | 2.94 | 100 | 25.0 | - |
| Example 3 | 100 | 17.6 | 0.82 | 1.18 | 100 | 25.0 | - |
| Example 4 | 100 | 17.6 | 0.82 | 1.18 | 100 | 25.0 | - |
| Example 5 | 100 | 17.6 | 0.99 | 1.18 | 100 | 42.9 | - |
| Example 6 | 100 | 17.6 | 1.24 | - | 100 | 72.4 | - |
| Example 7 | 100 | 17.6 | 1.24 | - | 100 | 72.4 | - |
| Example 8 | 100 | 16.3 | 1.17 | - | 100 | 72.4 | - |
| Example 9 | 100 | 16.3 | 1.17 | - | 100 | 72.4 | - |
| Example 10 | 100 | 17.6 | 1.24 | - | 100 | 42.9 | 100 |
| Example 11 | 100 | 17.6 | 1.24 | - | 100 | 72.4 | 100 |
| Example 12 | 100 | 17.6 | 1.24 | - | 100 | 42.9 | 100 |
| Example 13 | 100 | 17.6 | 1.24 | - | 100 | 42.9 | 100 |
| Comparative Example 1 | 100 | 17.6 | 0.16 | 4.12 | 100 | 42.9 | - |
| Comparative Example 2 | 100 | 25.0 | 1.05 | - | 100 | 33.3 | - |
| Comparative Example 3 | 100 | 5.3 | 0.74 | 1.58 | 100 | 25.0 | - |
| Comparative Example 4 | 100 | 17.6 | 0.82 | 1.76 | 100 | 25.0 | - |

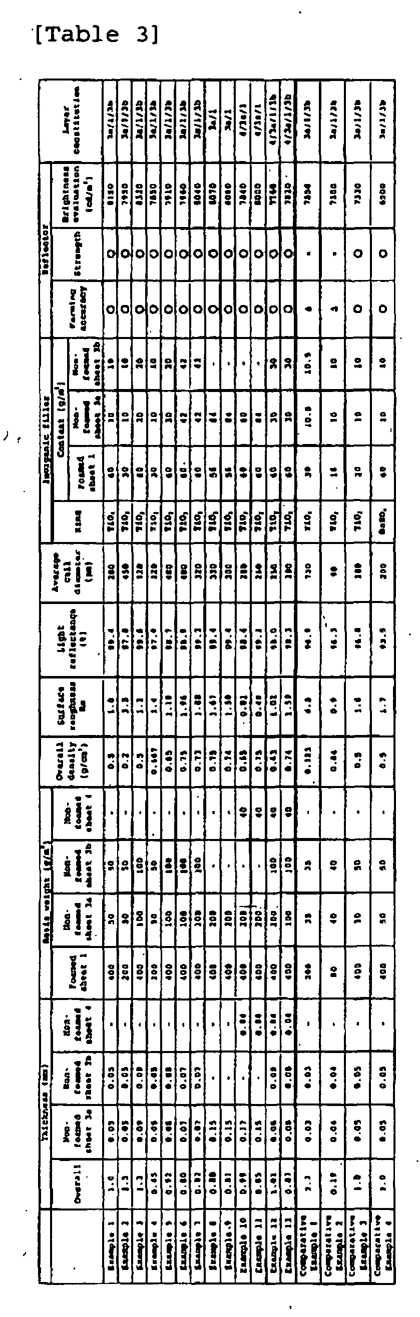

**[Table 4]**

| | Foamable polypropylene-based resin composition (parts by weight) | | | |
|---|---|---|---|---|
| | Polypropylene-based resin | Inorganic filler masterbatch | Foaming agent | |
| | | | Bicarbonate/ citric acid masterbatch | Butane |
| Example 14 | 70 | 30 | 1.0 | 1.4 |
| Example 15 | 60 | 40 | 1.0 | 1.4 |
| Example 16 | 70 | 30 | 0.4 | 2.5 |
| Example 17 | 70 | 30 | 1.2 | - |
| Comparative Example 5 | 70 | 30 | - | - |
| Comparative Example 6 | 90 | 10 | 0.2 | 4.0 |
| Comparative Example 7 | 90 | 10 | 1.0 | 1.3 |
| Comparative Example 8 | 70 | 30 | 1.0 | 1.4 |

**[Table 5]**

| | Foamable polypropylene-based resin composition (parts by weight) | | | |
|---|---|---|---|---|
| | Polypropylene-based resin | Inorganic filler | Foaming agent | |
| | | | Bicarbonate/c itric acid | Butane |
| Example 14 | 100 | 17.6 | 0.82 | 1.65 |
| Example 15 | 100 | 25.0 | 0.88 | 1.75 |
| Example 16 | 100 | 17.6 | 0.33 | 2.94 |
| Example 17 | 100 | 17.6 | 0.99 | - |
| Comparative Example 5 | 100 | 17.6 | - | - |
| Comparative Example 6 | 100 | 5.3 | 0.15 | 4.21 |
| Comparative Example 7 | 100 | 5.3 | 0.74 | 1.37 |
| Comparative Example 8 | 100 | 17.6 | 0.82 | 1.65 |

**[Table 6]**

| | Thickness (mm) | Basis weight (g/m²) | Density (g/cm³) | Light reflectance (%) | Average cell diameter (µm) | Inorganic filler | | Reflector | |
|---|---|---|---|---|---|---|---|---|---|
| | | | | | | Kind | Content (g/m²) | Forming accuracy | Strength |
| Example 14 | 1.0 | 500 | 0.50 | 98.6 | 220 | TiO₂ | 75 | ○ | ○ |
| Example 15 | 1.0 | 500 | 0.50 | 99.1 | 250 | TiO₂ | 100 | ○ | ○ |
| Example 16 | 1.4 | 350 | 0.25 | 97.8 | 350 | TiO₂ | 52.5 | ○ | ○ |
| Example 17 | 0.6 | 402 | 0.67 | 98.3 | 90 | TiO₂ | 60 | ○ | ○ |
| Comparative Example 5 | 0.3 | 351 | 1.17 | 96.8 | - | TiO₂ | 52.5 | Δ | × |
| Comparative Example 6 | 2.5 | 400 | 0.16 | 94.5 | 850 | TiO₂ | 20 | × | ○ |
| Comparative Example 7 | 1.0 | 500 | 0.50 | 96.2 | 190 | TiO₂ | 25 | ○ | ○ |
| Comparative Example 8 | 1.0 | 500 | 0.50 | 93.3 | 200 | BaSO₄ | 75 | ○ | ○ |

### INDUSTRIAL APPLICABILITY

The foamed sheet for a reflector of the present invention can be thermoformed easily into a reflector having a desired shape. This reflector can be used in applications such as a reflector of a liquid crystal display device.

## Claims

1. A foamed sheet for a reflector comprising a polypropylene-based resin foamed sheet (1), a polypropylene-based resin non-foamed sheet (3) and 50 to 200 g/m² of an inorganic filler (2);
wherein:
the polypropylene-based resin foamed sheet (1) comprises cells having an average diameter of 50 to 650 µm, and at least one surface (12) of the polypropylene-based resin foamed sheet (1) is unevenly formed by cells (11) located in the vicinity of the surface;
the polypropylene-based resin non-foamed sheet (3) is integrally laminated on the uneven surface (12) of the polypropylene-based resin foamed sheet (1) in conformity with the uneven surface (12), and the non-foamed sheet (3) has an uneven surface (31) having a surface roughness of 0.4 to 5.0 µm;
the inorganic filler (2) is contained in both the polypropylene-based resin foamed sheet (1) and the polypropylene-based resin non-foamed sheet (3), the amount of the filler in the polypropylene-based resin foamed sheet (1) being from 10 to 80% by weight of the total amount of the filler in the foamed sheet for a reflector;
a refractive index of the inorganic filler (2) differs by 1.0 or more from a refractive index of the polypropylene-based resin in contact with the inorganic filler (2); and
the foamed sheet for a reflector has an overall thickness of 0.2 to 2.0 mm and a light reflectance of 97% or more.

2. A foamed sheet for a reflector according to Claim 1, wherein the inorganic filler (2) is titanium dioxide.

3. A foamed sheet for a reflector according to Claim 2, wherein the titanium dioxide is rutile-type titanium dioxide.

4. A method for producing a reflector by thermoforming a foamed sheet for a reflector as defined in any preceding claim.

5. A method for producing a foamed sheet for a reflector, the method comprising:
a step of producing a foamable polypropylene-based resin composition by feeding 100 parts by weight of a polypropylene-based resin, 5 to 30 parts by weight of an inorganic filler having a refractive index differing by 1.0 or more from a refractive index of the polypropylene-based resin, and 0.4 to 4.0 parts by weight of a foaming agent into a first extruder and melt-kneading them;
a step of feeding 100 parts by weight of a polypropylene-based resin and 10 to 150 parts by weight of an inorganic filler having a refractive index differing by 1.0 or more from a refractive index of the polypropylene-based resin into a second extruder and melt-kneading them in the absence of a foaming agent; and
a step of extrusion-foaming the foamable polypropylene-based resin composition and extruding the polypropylene-based resin in the second extruder simultaneously through a coextrusion die to which both the first extruder and the second extruder are connected, thereby integrally laminating a polypropylene-based resin non-foamed sheet (3) having a thickness of 0.03 to 0.4 mm on at least one surface (12) of a polypropylene-based resin foamed sheet (1) having an average cell diameter of 50 to 650 µm;
wherein the polypropylene-based resin non-foamed sheet (3) has an uneven surface (31) due to irregularities formed in one surface (12) of the polypropylene-based resin foamed sheet (1); and
wherein the foamed sheet for a reflector comprises 50 to 200 g/m² of the inorganic filler (2), has a light reflectance of 97% or more and an overall thickness of 0.2 to 2.0 mm.

6. A method according to Claim 5, wherein the foaming agent is a solid foaming agent, a liquid inorganic compound or a gaseous inorganic compound.

7. A method according to Claim 5 or Claim 6, wherein the foaming agent is a mixture of an organic acid or a salt thereof and a bicarbonate together with an organic gas.

8. A method according to Claim 7, wherein the mixture of an organic acid or a salt thereof and a bicarbonate is a mixture of sodium bicarbonate and citric acid.

## Patentansprüche

1. Geschäumte Platte für einen Reflektor, die eine geschäumte Platte (1) aus einem Harz auf Polypropylenbasis, eine nicht-geschäumte Platte (3) aus einem Harz auf Polypropylenbasis und 50 bis 200 g/m² eines anorganischen Füllstoffs (2) umfasst;
worin
die geschäumte Platte (1) aus Harz auf Polypropylenbasis Zellen mit einem mittleren Durchmesser von 50 bis 650 µm umfasst und mindestens eine Oberfläche (12) der geschäumten Platte aus Harz auf Polypropylenbasis durch Zellen (11), die in der Nähe der Oberfläche lokalisiert sind, uneben geformt ist;
die nicht-geschäumte Platte (3) aus Harz auf Polypropylenbasis auf der unebenen Oberfläche (12) der geschäumten Platte (1) aus Harz auf Polypropylenbasis in Übereinstimmung mit der unebenen Oberfläche (12) integral laminiert ist, und die nicht-geschäumte Platte (3) eine unebene Oberfläche (31) mit einer Oberflächenrauheit von 0,4 bis 5,0 µm aufweist;
der anorganische Füllstoff (2) sowohl in der geschäumten Platte (1) aus Harz auf Polypropylenbasis als auch in der nicht-geschäumten Platte (3) aus Harz auf Polypropylenbasis enthalten ist, wobei die Menge des Füllstoffs in der geschäumten Platte (1) aus Harz auf Polypropylenbasis 10 bis 80 Gew.% der Gesamtmenge des Füllstoffs in der geschäumten Platte für einen Reflektor ist;
ein Brechungsindex des anorganischen Füllstoffs sich um 1,0 oder mehr von einem Brechungsindex des Harzes auf Polypropylenbasis, das in Kontakt mit dem anorganischen Füllstoff (2) steht, unterscheidet; und
die geschäumte Platte für einen Reflektor eine Gesamtdicke von 0,2 bis 2,0 mm und eine Lichtreflektion von 97 % oder mehr aufweist.

2. Geschäumte Platte für einen Reflektor gemäß Anspruch 1, worin der anorganische Füllstoff (2) Titandioxid ist.

3. Geschäumte Platte für einen Reflektor gemäß Anspruch 2, worin das Titandioxid Titandioxid vom Rutil-Typ ist.

4. Verfahren zur Herstellung eines Reflektors durch Thermoformen einer geschäumten Platte für einen Reflektor wie in irgendeinem vorhergehenden Anspruch definiert.

5. Verfahren zur Herstellung einer geschäumten Platte für einen Reflektor, wobei das Verfahren umfasst:
einen Schritt des Herstellens einer schäumbaren Harzzusammensetzung auf Polypropylenbasis durch Zuführen von 100 Gew.-Teilen eines Harzes auf Polypropylenbasis, 5 bis 30 Gew.-Teilen eines anorganischen Füllstoffs mit einem Brechungsindex, der sich um 1,0 oder mehr vom Brechungsindex des Harzes auf Polypropylenbasis unterscheidet, und 0,4 bis 4,0 Gew.-Teile eines Schäummittels in einen ersten Extruder und Schmelzkneten;
einen Schritt des Zuführens von 100 Gew.-Teilen eines Harzes auf Polypropylenbasis und 10 bis 150 Gew.-Teilen eines anorganischen Füllstoffs mit einem Brechungsindex, der sich um 1,0 oder mehr vom Brechungsindex des Harzes auf Polypropylenbasis unterscheidet, in einem zweiten Extruder und Schmelzkneten in Abwesenheit eines Schäummittels; und
einen Schritt des Extrusionsschäumens der schäumbaren Harzzusammensetzung auf Polypropylenbasis und gleichzeitiges Extrudieren des Harzes auf Polypropylenbasis im zweiten Extruder durch eine Coextrusionsdüse, mit der sowohl der erste Extruder als auch der zweite Extruder verbunden ist, dadurch integrales Laminieren einer nicht-geschäumten Platte (3) aus Harz auf Polypropylenbasis mit einer Dicke von 0,03 bis 0,4 mm auf mindestens eine Oberfläche (12) einer geschäumten Platte (1) aus Harz auf Polypropylenbasis mit einem mittleren Zelldurchmesser von 50 bis 650 µm;
worin die nicht-geschäumte Platte (3) aus Harz auf Polypropylenbasis aufgrund von in der Oberfläche (12) der geschäumten Platte (1) aus Harz auf Polypropylenbasis gebildeten Unregelmäßigkeiten eine unebene Oberfläche (31) aufweist; und
worin die geschäumte Platte für einen Reflektor 50 bis 200 g/m² des anorganischen Füllstoffs (2) umfasst, eine Lichtreflektion von 97 % oder mehr und eine Gesamtdicke von 0,2 bis 2,0 mm aufweist.

6. Verfahren gemäß Anspruch 5, worin das Schäummittel ein festes Schäummittel, eine flüssige anorganische Verbindung oder eine gasförmige anorganische Verbindung ist.

7. Verfahren gemäß Anspruch 5 oder 6, worin das Schäummittel eine Mischung aus einer organischen Säure oder einem Salz davon und einem Bicarbonat zusammen mit einem organischen Gas ist.

8. Verfahren gemäß Anspruch 7, worin die Mischung aus einer organischen Säure oder einem Salz davon und einem Bicarbonat eine Mischung aus Natriumbicarbonat und Zitronensäure ist.

## Revendications

1. Feuille alvéolaire pour un réflecteur comprenant une feuille alvéolaire de résine à base de polypropylène (1), une feuille non alvéolaire de résine à base de polypropylène (3) et 50 à 200 g/m² d'un agent de remplissage inorganique (2) ;
dans laquelle :
la feuille alvéolaire de résine à base de polypropylène (1) comprend des cellules ayant un diamètre moyen de 50 à 650 µm, et au moins une surface (12) de la feuille alvéolaire de résine à base de polypropylène (1) est formée de manière inégale par des cellules (11) situées au voisinage de la surface ;
la feuille non alvéolaire de résine à base de polypropylène (3) est stratifiée d'un seul tenant sur la surface inégale (12) de la feuille alvéolaire de résine à base de polypropylène (1) conformément à la surface inégale (12), et la feuille non alvéolaire (3) a une surface inégale (31) ayant une rugosité de surface de 0,4 à 5,0 µm ;
l'agent de remplissage inorganique (2) est contenu tant dans la feuille alvéolaire de résine à base de polypropylène (1) que dans la feuille non alvéolaire de résine à base de polypropylène (3), la quantité de l'agent de remplissage dans la feuille alvéolaire de résine à base de polypropylène (1) étant de 10 à 80 % en poids de la quantité totale de l'agent de remplissage dans la feuille alvéolaire pour un réflecteur ;
un indice de réfraction de l'agent de remplissage inorganique (2) diffère de 1,0 ou plus d'un indice de réfraction de la résine à base de polypropylène en contact avec l'agent de remplissage inorganique (2) ; et
la feuille alvéolaire pour un réflecteur a une épaisseur globale de 0,2 à 2,0 mm et une réflectance de lumière de 97 % ou plus.

2. Feuille alvéolaire pour un réflecteur selon la revendication 1, dans laquelle l'agent de remplissage inorganique (2) est du dioxyde de titane.

3. Feuille alvéolaire pour un réflecteur selon la revendication 2, dans laquelle le dioxyde de titane est un dioxyde de titane de type rutile.

4. Procédé pour produire un réflecteur par thermoformage d'une feuille alvéolaire pour un réflecteur selon l'une quelconque des revendications précédentes.

5. Procédé pour produire une feuille alvéolaire pour un réflecteur, le procédé comprenant :
une étape de production d'une composition de résine expansible à base de polypropylène en amenant 100 parties en poids d'une résine à base de polypropylène, 5 à 30 parties en poids d'un agent de remplissage inorganique ayant un indice de réfraction différant de 1,0 ou plus d'un indice de réfraction de la résine à base de polypropylène, et 0,4 à 4,0 parties en poids d'un agent moussant dans une première extrudeuse et pétrissage-fusion de ceux-ci ;
une étape d'amenée de 100 parties en poids d'une résine à base de polypropylène et de 10 à 150 parties en poids d'un agent de remplissage inorganique ayant un indice de réfraction différant de 1,0 ou plus d'un indice de réfraction de la résine à base de polypropylène dans une seconde extrudeuse et pétrissage-fusion de ceux-ci en l'absence d'un agent moussant ; et
une étape d'extrusion-transformation en mousse de la composition de résine expansible à base de polypropylène et extrusion de la résine à base de polypropylène dans la seconde extrudeuse simultanément à travers une filière de coextrusion à laquelle tant la première extrudeuse que la seconde extrudeuse sont reliées, stratifiant de ce fait d'un seul tenant une feuille non alvéolaire de résine à base de polypropylène (3) ayant une épaisseur de 0,03 à 0,4 mm sur au moins une surface (12) d'une feuille alvéolaire de résine à base de polypropylène (1) ayant un diamètre de cellule moyen de 50 à 650 µm ;
dans lequel la feuille non alvéolaire de résine à base de polypropylène (3) a une surface inégale (31) en raison d'irrégularités formées dans une surface particulière (12) de la feuille alvéolaire de résine à base de polypropylène (1) ; et
dans lequel la feuille alvéolaire pour un réflecteur comprend 50 à 200 g/m² de l'agent de remplissage inorganique (2), a une réflectance de lumière de 97 % ou plus et une épaisseur globale de 0,2 à 2,0 mm.

6. Procédé selon la revendication 5, dans lequel l'agent moussant est un agent moussant solide, un composé inorganique liquide ou un composé inorganique gazeux.

7. Procédé selon la revendication 5 ou la revendication 6, dans lequel l'agent moussant est un mélange d'un acide organique ou un sel de ce dernier et d'un bicarbonate en même temps qu'un gaz organique.

8. Procédé selon la revendication 7, dans lequel le mélange d'un acide organique ou d'un sel de ce dernier et d'un bicarbonate est un mélange de bicarbonate de sodium et d'acide citrique.
